# EUROPÄISCHE PATENTSCHRIFT

(11) **EP 4 267 352 B1**
(45) Veröffentlichungstag und Bekanntmachung des Hinweises auf die Patenterteilung: **26.08.2026**
(21) Anmeldenummer: 21840773.2
(22) Anmeldetag: 22.12.2021
(51) Int. Cl.: B25J 9/16, B65G 1/00, B65G 1/137

(54) **VERFAHREN ZUM UMLADEN VON WAREN MIT HILFE EINES ROBOTERS MIT VERBESSERTER EFFIZIENZ UND LAGER- UND KOMMISSIONIERSYSTEM HIERZU**
METHOD FOR TRANSFERRING PRODUCTS WITH IMPROVED EFFICIENCY BY MEANS OF A ROBOT, AND STORAGE AND ORDER-PICKING SYSTEM THEREFOR
PROCÉDÉ DE TRANSFERT DE PRODUITS AVEC UNE EFFICACITÉ AMÉLIORÉE AU MOYEN D'UN ROBOT, ET SYSTÈME DE STOCKAGE ET DE PRÉPARATION DE COMMANDES ASSOCIÉ

(30) Priorität: 23.12.2020 AT 511392020
(43) Veröffentlichungstag der Anmeldung: 01.11.2023
(60) Teilanmeldung: 26190370.2
(73) Patentinhaber: TGW Logistics GmbH, 4614 Marchtrenk (AT)
(72) Erfinder: LINDLEY, Timothy, 58239 Schwerte (DE); KETTLGRUBER, Gerald, 4030 Linz (AT)
(74) Vertreter: Burger, Hannes
(86) Internationale Anmeldenummer: PCT/AT2021/060485
(87) Internationale Veröffentlichungsnummer: WO 2022/133511

(56) Entgegenhaltungen:
- EP-A2- 0 331 478
- JP-A- 2017 014 012
- US-A1- 2015 066 200
- US-A1- 2020 027 205
- US-A1- 2020 130 936
- US-A1- 2020 218 865
- ANDRZEJEWSKI K T ET AL: "Optimisation process for robotic assembly of electronic components", THE INTERNATIONAL JOURNAL OF ADVANCED MANUFACTURING TECHNOLOGY, SPRINGER, LONDON, vol. 99, no. 9, 5 September 2018 (2018-09-05), pages 2523 - 2535, XP036640295, ISSN: 0268-3768, [retrieved on 20180905], DOI: 10.1007/S00170-018-2645-Y

## Beschreibung

Die Erfindung betrifft ein Verfahren zum Betreiben eines Roboters zum Umladen von verschiedenen Waren in einem Lager- und Kommissioniersystem, bei dem
a) Greifbarkeitstypen zu den verschiedenen Waren an einem elektronischen Steuerungssystem erfasst werden, wobei die Greifbarkeitstype angibt, mit welchem Greifer entsprechend welcher Greifertype das Greifen der jeweiligen Ware ermöglicht ist,
b) Greifer unterschiedlicher Greifertype dem Roboter bereitgestellt werden,
c) ein Greifer aus den unterschiedlichen Greifertypen abhängig von der Greifbarkeitstype der umzuladenden Ware durch das elektronische Steuerungssystem ausgewählt wird,
d) der ausgewählte Greifer mit einem Roboterkopf des Roboters gekoppelt wird oder der ausgewählte Greifer auf einem Roboterkopf des Roboters aktiviert wird,
e) die Waren an einer ersten Position in einem Wirkungsbereich des Roboters bereitgestellt werden, und
f) die Ware mit dem ausgewählten Greifer am Roboter an der ersten Position gegriffen und an einer zweiten Position im Wirkungsbereich des Roboters abgegeben werden.

Die Erfindung betrifft zudem ein Lager- und Kommissioniersystem, welches
einen Roboter zum Umladen von Waren umfasst, aufweisend einen Roboterkopf und zumindest zwei verschiedene an den Roboterkopf abwechselnd ankoppelbare Greifer oder zumindest zwei verschiedene auf dem Roboterkopf angeordnete und wechselweise aktivierbare Greifer,
ein elektronisches Steuerungssystem umfasst, welches dazu eingerichtet ist, Greifbarkeitstypen zu den verschiedenen Waren zu erfassen, wobei die Greifbarkeitstype angibt, mit welchem Greifer entsprechend welcher Greifertype das Greifen der jeweilige Ware ermöglicht ist, und welches weiter dazu eingerichtet ist, einen am Roboter bereitgestellten Greifer aus den unterschiedlichen Greifertypen abhängig von der Greifbarkeitstype der umzuladenden Ware auszuwählen und ein Koppeln des gewählten Greifers mit dem Roboterkopf oder ein Aktivieren des gewählten Greifers auf dem Roboterkopf auszulösen, und
eine Fördertechnik umfasst, welche dazu ausgebildet ist, Waren zu einer ersten Position in einem Wirkungsbereich des Roboters anzutransportieren,
wobei der Roboter dazu ausgebildet ist, die Ware mit dem ausgewählten Greifer an der ersten Position in dem Wirkungsbereich des Roboters zu greifen und die Ware an einer zweiten Position im Wirkungsbereich des Roboters abzulegen.

Ein solches Verfahren und ein solches Lager- und Kommissioniersystem sind aus dem Stand der Technik grundsätzlich bekannt. Beispielsweise können diese zum Kommissionieren und/oder Sortieren von Waren eingesetzt werden. Die große Vielfalt an Waren führt dazu, dass am Roboter unterschiedliche Greifer eingesetzt werden müssen, um die Waren sicher und mit hoher Geschwindigkeit manipulieren zu können. Ein Wechsel des Greifers führt jedoch zu einem unerwünschten Stillstand des Warenflusses, da während des Wechsels keine Waren manipuliert werden können.

Die US 2020/130936 A1 offenbart ein Lagersystem mit verschiedenen Ausführungen zu einem Identifikations- und Planungssystem sowie ein Verfahren zur Auftragsabwicklung.

K.T. Andrzejewski et al., "Optimisation process for robotic assembly of electronic components", The International Journal of Advanced Manufacturing Technology, Bd. 99, Seiten 2523-2535 befasst sich mit der Entwicklung eines effizienten Bestückungssystems für Leiterplatten. Dabei sind zwei unterschiedliche, aber miteinander verbundene Probleme zu lösen. Zunächst ist die Zuordnung der Bauteiltypen zu den Feederpositionen mit reduziertem Abstand erforderlich. Anschließend muss die Reihenfolge der einzelnen Bauteile auf den Leiterplatten ermittelt werden. Jeder Bauteil-ID wurde eine Werkzeugnummer zugewiesen, die dem für einen Pick-and-Place-Vorgang geeigneten Endeffektor entspricht. Die Umrüstzeit des Endeffektors wirkt sich negativ auf die Zykluszeit aus. Um die Produktivität zu steigern, ist es daher unerlässlich, den Werkezugwechsel für verschiedene Bauteile zu minimieren. Um diese Einschränkung zu berücksichtigen, gruppiert ein Algorithmus die Bauteile anhand ihrer Werkzeugnummer und sucht innerhalb jeder Gruppe nach optimalen Sequenzierungslösungen.

Die EP 0 331 478 A2 bezieht sich allgemein auf Fertigungssysteme, bei denen Objekte nach Greifertype sortiert und gruppenweise aufgenommen werden.

Eine Aufgabe der Erfindung ist es daher, ein verbessertes Verfahren und ein verbessertes Lager- und Kommissioniersystem anzugeben. Insbesondere sollen Unterbrechungen im Warenfluss möglichst gering gehalten werden.

Die Aufgabe der Erfindung wird mit einem Verfahren gemäß Anspruch 1 oder Anspruch 6 gelöst.

Die Aufgabe der Erfindung wird darüber hinaus mit einem Lager- und Kommissioniersystem gemäß Anspruch 7 oder Anspruch 9 gelöst.

Durch Bildung der Warengruppen kann die Anzahl an Greiferwechsel auf ein Minimum reduziert werden, selbst wenn ein extrem breites Warensortiment und damit verbunden eine hohe Anzahl an verschiedenen Waren vorliegt. Je höher die Anzahl der Waren in einer Warengruppe ist, desto seltener ist auch ein Greiferwechsel notwendig.

Der Begriff "Greifer" ist im Rahmen der Erfindung weit zu fassen und umfasst nicht nur Greifwerkzeuge mit Greiffingern oder zangenartige Greifwerkzeuge, sondern insbesondere auch Sauggreifer, welche eine Ware mit Hilfe eines Unterdrucks greifen oder aufnehmen.

Ein Greifer kann somit beispielsweise
ein kraftschlüssig wirkender Greifer sein, wie zum Beispiel ein Sauggreifer, insbesondere ein Vakuum-Sauggreifer mit einem Saugnapf oder ein Vakuum-Sauggreifer mit einer Vielzahl von Saugnäpfen,
ein formschlüssig wirkender Greifer, wie zum Beispiel ein Fingergreifer, insbesondere ein Fingergreifer mit zwei Greiffingern oder ein Fingergreifer mit drei Greiffingern, oder
ein Kombinationsgreifer aus einem kraftschlüssig wirkenden Greifer und einem formschlüssig wirkenden Greifer.

Die unterschiedlichen Arten der Greifer werden durch den jeweils zugeordneten "Greifertyp" beschrieben. Beispielsweise kann einem Vakuum-Sauggreifer mit einem Saugnapf eine erste Greifertype und einem Vakuum-Sauggreifer mit einer Vielzahl von Saugnäpfen eine zweite Greifertype zugeordnet sein, usw. Ebenso kann einem Fingergreifer mit zwei Greiffingern eine erste Greifertype und einem Fingergreifer mit drei Greiffingern eine zweite Greifertype zugeordnet sein, usw. Gleichermaßen können unterschiedlichen Kombinationsgreifern verschiedene Greifertypen zugeordnet sein.

Mit anderen Worten kann eine unterschiedliche Auslegung der Greifer innerhalb desselben Wirkprinzips beziehungsweise innerhalb derselben Greiftechnologie (beispielweise eine variierende Anzahl an Saugnäpfen bei Sauggreifen) zu unterschiedlichen Greifertypen führen.

Möglich ist aber selbstverständlich auch, dass unterschiedliche Wirkprinzipien beziehungsweise Greiftechnologien (zum Beispiel Sauggreifer vs. Klemmgreifer) zu verschiedenen Greifertypen führen.

Das Lager- und Kommissioniersystem umfasst im Rahmen der Erfindung zumindest zwei verschiedene Greifer. Mit anderen Worten umfasst das Lager- und Kommissioniersystem somit zumindest zwei Greifer unterschiedlicher Greifertype.

Einerseits können sich die unterschiedlichen Greifer in einem Magazin im Wirkungsbereich des Roboters befinden und werden von dort nach Bedarf entnommen und mit dem Roboterkopf verbunden. Andererseits können die Greifer aber auch dauerhaft am Roboterkopf angeordnet sein und bei Bedarf aktiviert werden. Beispielsweise können sie in einem Revolvermagazin am Roboterkopf angeordnet sein. In diesem Zusammenhang wird angemerkt, dass der Begriff "Aktivieren" eines Greifers nicht mit dem Begriff "Greifen" (mit dem Greifer) gleichgesetzt werden darf, sondern lediglich Überführen eines Greifers von einem passiven Zustand, in dem ein Greifen nicht möglich ist, in einen Bereitschaftszustand bedeutet, welcher ein Greifen ermöglicht. Passive beziehungsweise nicht aktive Greifer können somit nicht greifen. Dasselbe gilt für den Begriff "Koppeln" eines Greifers.

Die "Greifbarkeitstype" gibt jene Waren an, die mit einem bestimmten Greifer entsprechend einer bestimmten Greifertype gegriffen werden können. Die Greifbarkeitstype ist gleichzeitig das Sortierkriterium für die Bildung einer Warengruppe. Wenn jeder Ware genau eine Greifbarkeitstype zugeordnet ist, dann existiert genau eine Lösung für das Bilden einer Warengruppe. Sind einigen oder allen Waren mehrere Greifbarkeitstypen zugeordnet, dann existieren mehrere Möglichkeiten für die Bildung einer Warengruppe. Denkbar ist beispielsweise, dass in einem solchen Fall eine Greifbarkeitstype gewählt wird, welche den größten Überschneidungsbereich aufweist. Ist einer ersten Ware (Ware 1) beispielsweise eine Greifbarkeitstypen A und B zugeordnet und einer zweiten Ware (Ware 2) eine Greifbarkeitstype B und C, dann wird vorteilhaft die Greifbarkeitstype B für beide Waren (Waren 1 und 2) gewählt.

Während die Greifbarkeitstype die Waren charakterisiert, so charakterisiert die der Greifbarkeitstype entsprechende Greifertype den Greifer eines Roboters. Die Greifbarkeitstype und die Greifertype können daher einander direkt im Sinne einer 1:1-Beziehung zugeordnet sein. In einem Lager- und Kommissioniersystem kann es mehrere Greifer derselben Greifertype geben, beispielsweise auf mehrere Roboter verteilt. Auch einem einzigen Roboter können mehrere Greifer einer Greifertype zugeordnet sein, beispielsweise, um im Falle eines Defekts eine Reserve zu haben.

Die Greifbarkeitstype wird einerseits von den Eigenschaften des Greifers der zugeordneten Greifertype beeinflusst, andererseits aber auch von den "Wareneigenschaften" der zu greifenden Ware. Dabei soll nicht unerwähnt bleiben, dass eine Ware in aller Regel Wareneigenschaften aufweist, welche die Greifbarkeit beeinflussen oder beeinflussen können, und solche, die in aller Regel keinen Einfluss auf die Greifbarkeit haben. Beispiele für Wareneigenschaften, welche die Greifbarkeit beeinflussen können, sind die Biegesteifigkeit der Ware, die Zerbrechlichkeit der Ware, die Dichte der Ware, das Gewicht der Ware, die Form der Oberfläche der Ware, die Rauigkeit der Oberfläche der Ware, die Permeabilität der Oberfläche der Ware, usw. Beispiele für Wareneigenschaften, welche die Greifbarkeit in der Regel nicht beeinflussen sind die Farbe der Ware, der Reflexionsgrad der Oberfläche der Ware, usw.

Eine oder mehrere Wareneigenschaften definieren einen "Warentyp". Ein erster Warentyp kann biegeschlaffe Waren umfassen, ein zweiter Warentyp kann biegesteife Waren umfassen, usw. Eine biegeschlaffe Ware ist beispielweise ein T-Shirt in einem Kunststoffbeutel, eine biegesteife Ware ist beispielweise ein Paar Schuhe in einem Karton. Waren unterschiedlicher Warentype können jedoch derselben Greifbarkeitstype zugeordnet sein. Ein Beispiel wäre ein Hemd und ein T-Shirt, die jeweils in einem Kunststoffbeutel eingepackt sind und somit auf dieselbe Art und Weise gegriffen werden können.

Die einer Ware zugeordnete Greifbarkeitstype ist beispielsweise in den Stammdaten zu einer Ware hinterlegt, insbesondere zusätzlich zu weiteren Daten, welche einen Warentyp der Ware charakterisieren. Grundsätzlich ist es auch möglich, dass zu einer Ware oder einer Warentype mehrere Greifbarkeitstypen gespeichert sind, wenn das Greifen der Ware mit mehreren Greifern oder Greifertypen ermöglicht ist.

Das Erfassen der Greifbarkeitstype einer Ware kann durch Identifikation der Ware nach einem Auslesen eines Datenträgers erfolgen. Das Auslesen eines Datenträgers kann an einem Lesegerät erfolgen, welches mit dem Steuerungssystem verbunden ist. Der Datenträger ist beispielweise ein Barcode, Matrixcode, insbesondere ein QR-Code (Quick-Response-Code), Data Matrix-Code, RFID-Tag (Radio Frequency Identification), und dergleichen. Das Lesegerät kann ein optisches oder opto-elektronisches Lesegerät sein, mit dem die Daten maschinell gelesen werden können. Der Datenträger kann Daten enthalten, insbesondere eine Identifikationsnummer, anhand der auf die Stammdaten, in welchen die Greifbarkeitstype zu dieser Ware gespeichert ist, zurückgegriffen werden kann. Der Datenträger kann Daten über die Greifbarkeitstype aber auch direkt enthalten.

Das Erfassen der Greifbarkeitstype einer Ware kann aber auch durch Erkennen der Ware mit Mitteln der "Objekterkennung" erfolgen. Die Objekterkennung beschreibt ein Verfahren zum Identifizieren eines Objektes (welches einer Ware entspricht) mittels optischer, akustischer oder anderer physikalischer Erkennungsverfahren. Insbesondere kann nach einem Identifizieren der Ware durch Objekterkennung auf die Stammdaten zurückgegriffen werden, in welchen die Greifbarkeitstype zu dieser Ware gespeichert ist.

Der Begriff "Bereitstellen" der Waren im Wirkungsbereich des Roboters umfasst insbesondere das Zuführen der Waren zum Wirkungsbereich des Roboters.

Der Begriff "Abgeben" von Waren umfasst sowohl das Abwerfen von Waren als auch das Ablegen von Waren.

Bei dem Steuerungssystem handelt es sich insbesondere um ein übergeordnetes Steuerungssystem und nicht zwangsläufig um eine Robotersteuerung.

Weitere vorteilhafte Ausgestaltungen und Weiterbildungen der Erfindung ergeben sich aus den Unteransprüchen sowie aus der Beschreibung in Zusammenschau mit den Figuren.

Vorteilhaft ist es, wenn die Waren innerhalb einer Warengruppe im Hinblick auf eine Warentype der Waren artikelrein sortiert werden. Demgemäß bildet die Warentype ein der Greifertype untergeordnetes Sortierkriterium, wodurch sich innerhalb einer Warengruppe Blöcke von Waren gleicher Warentype ergeben. Beispielsweise können Hemden und T-Shirts innerhalb einer Warengruppe voneinander getrennte Blöcke bilden. Diese Ausführungsvariante ist beispielsweise am Wareneingang dann von Vorteil, wenn Waren artikelrein eingelagert werden sollen. Weiterhin ist diese Ausführungsvariante insbesondere bei der Kommissionierung von Waren im B2B-Bereich von Vorteil, da hier häufig viele Waren einer Warentype bestellt werden, die in Folge in einem Shop artikelrein eingelagert werden sollen.

Vorteilhaft ist es aber auch, wenn die Waren innerhalb einer Warengruppe im Hinblick auf eine Warentype der Waren chaotisch angeordnet werden. Bei dieser Ausführungsvariante bildet die Warentype kein Sortierkriterium innerhalb einer Warengruppe. Beispielsweise können Hemden und T-Shirts innerhalb einer Warengruppe gemischt angeordnet sein. Diese Ausführungsvariante ist beispielsweise am Wareneingang dann von Vorteil, wenn Waren chaotisch eingelagert werden sollen. Weiterhin ist diese Ausführungsvariante insbesondere bei der Kommissionierung von Waren im E-Commerce- bzw. B2C-Bereich von Vorteil, da hier häufig wenige Waren vieler unterschiedlicher Warentype bestellt werden, die als Block in einen Versandkarton gepackt werden.

Besonders vorteilhaft ist es, wenn eine Reihung der Warengruppen abhängig von der Greifertype eines aktuell im Roboter aktivierten oder gekoppelten Greifers durchgeführt wird, wobei Waren der ersten Warengruppe eine Greifbarkeitstype aufweisen, welcher der Greifertype des aktuell im Roboter aktivierten oder gekoppelten Greifers entspricht. In diesem Fall wird bei der Zuführung der Waren zu dem Roboter darauf geachtet, dass dem Roboter zuerst jene Waren angedient werden, welche von dem aktuell im Roboter aktivierten Greifer oder am Roboter gekoppelten Greifer gegriffen werden können. Auf diese Weise wird ein Greiferwechsel vorteilhaft vermieden.

Von Vorteil ist es aber auch, wenn eine Reihung der Warengruppen unabhängig von der Greifertype des aktuell im Roboter aktivierten oder gekoppelten Greifers durchgeführt wird. In diesem Fall wird bei der Zuführung der Waren zu dem Roboter nicht darauf geachtet, dass dem Roboter zuerst jene Waren angedient werden, welche von dem aktuell im Roboter aktivierten Greifer oder am Roboter gekoppelten Greifer gegriffen werden können. Auf diese Weise ist ein Greiferwechsel für das Greifen von Waren der ersten Warengruppe unter Umständen erforderlich. Diese Variante des Verfahrens ist von Vorteil, wenn die Waren der ersten Warengruppe priorisiert bearbeitet werden sollen und ein möglicher Greiferwechsel in Kauf genommen wird.

Günstig ist es, wenn das Sortieren der unterschiedlichen Waren zu Warengruppen je nach Greifbarkeitstype durch eine automatische Sortiervorrichtung ausgeführt wird, die ihrerseits mit dem elektronischen Steuerungssystem verbunden ist, um die automatische Sortiervorrichtung anzusteuern. Demgemäß ist es auch von Vorteil, wenn das Lager- und Kommissioniersystem eine mit der Fördertechnik fördertechnisch verbundene, automatische Sortiervorrichtung oder eine die Fördertechnik umfassende automatische Sortiervorrichtung aufweist, wobei die Sortiervorrichtung mit dem elektronischen Steuerungssystem steuerungstechnisch verbunden ist und die von dem Steuerungssystem derart angesteuert wird, dass die unterschiedlichen Waren zu Warengruppen je nach Greifbarkeitstype sortieren werden. Durch eine automatische Sortierung wird eine besonders hohe Sortierleistung erreicht und es wird damit eine unterbrechungsfreie Bereitstellung der Waren an der ersten Position ermöglicht.

Günstig ist es weiterhin, wenn die automatische Sortiervorrichtung eine Hängefördertechnik und Hängetaschen umfasst, wobei die Waren in den Hängetaschen gelagert werden. Demgemäß ist es auch von Vorteil, wenn die Fördertechnik eine Hängefördertechnik zum Transport der Hängetaschen von der automatischen Sortiervorrichtung in die erste Position umfasst oder durch eine solche Hängefördertechnik gebildet ist. Die Sortiervorrichtung kann eine oder mehrere Sortierstufen umfassen. Sind mehrere Sortierstufen vorhanden, sind die Sortierstufen fördertechnisch verbunden. Jede Sortierstufe umfasst eine Zuführstrecke, eine Abführstrecke und zwischen diesen eine oder mehrere Sortierstrecken. Die Zuführstrecke, Abführstrecke und Sortierstrecke(n) sind durch eine Hängefördertechnik gebildet. Die Waren werden von der Zuführstrecke selektiv in die Sortierstrecken zugeführt und von den Sortierstrecken selektiv in die Abführstrecke abgeführt. Beispielsweise ist die Sortiervorrichtung durch einen Matrixsorter gebildet.

Neben dem Sortieren in einer dedizierten Sortiervorrichtung kann das Sortieren aber auch auf andere Weise erfolgen, zum Beispiel durch Auslagern von Waren aus einem Lager in einer bestimmten Abfolge oder Gruppierung, wodurch eine nachfolgende Sortierung beziehungsweise Gruppierung hinfällig wird. Das Sortieren oder Gruppieren kann auch durch Ansteuern von Weichen und Zusammenführungen im Verlauf der Fördertechnik oder Fördereinrichtung erfolgen. Zudem ist die Verwendung von Pufferplätzen möglich, die an die Fördertechnik oder Fördereinrichtung angeschlossen sind. Dadurch können etwa einzelne Objekte aus dem Förderstrom entnommen und später an passender Stelle wieder eingefügt werden. Demgemäß umfasst der Begriff "Fördertechnik" eine Vorrichtung zur Bereitstellung von Waren getrennt nach Warengruppen in allgemeiner Form.

Vorteilhaft ist es zudem, wenn in jeder Hängetasche nur eine einzige Ware gelagert wird. Durch diese Maßnahme wird die Entnahme der Ware aus der Hängetasche erleichtert.

Günstig ist es auch, wenn die automatische Sortiervorrichtung eine Behälterfördertechnik und Behälter umfasst, wobei die Waren in den Behältern gelagert werden. Demgemäß ist es auch von Vorteil, wenn die Fördertechnik eine Behälterfördertechnik zum Transport der Behälter von der automatischen Sortiervorrichtung in die erste Position umfasst oder durch eine solche Behälterfördertechnik gebildet ist. Die Sortiervorrichtung kann eine oder mehrere Sortierstufen umfassen. Sind mehrere Sortierstufen vorhanden, sind die Sortierstufen fördertechnisch verbunden. Jede Sortierstufe umfasst eine Zuführstrecke, eine Abführstrecke und zwischen diesen eine oder mehrere Sortierstrecken. Die Zuführstrecke, Abführstrecke und Sortierstrecke(n) sind durch eine Behälterfördertechnik gebildet. Die Waren werden von der Zuführstrecke selektiv in die Sortierstrecken zugeführt und von den Sortierstrecken selektiv in die Abführstrecke abgeführt.

Besonders vorteilhaft ist es auch, wenn in jedem Behälter nur Waren einer einzigen Greifbarkeitstype gelagert werden. Bei "fachunterteilten" Behältern kann überdies vorgesehen sein, dass in jedem Fach des Behälters Waren einer einzige Greifbarkeitstype gelagert werden. "Fachunterteilte" Behälter weisen somit zumindest ein Aufnahmefach auf, das Waren derselben Greifbarkeitstype aufnimmt, die dementsprechend einer ersten oder zweiten Warengruppe zugewiesen werden. Durch die vorgeschlagenen Maßnahmen wird vermieden, dass bei der Entnahme von Waren aus einem Behälter oder aus einem Behälterfach ein Wechsel des Greifers erforderlich ist.

An dieser Stelle wird darauf hingewiesen, dass entsprechend der zu dieser Variante vorgeschlagenen Maßnahmen zwar nur Waren einer einzigen Greifbarkeitstype in einem Behälter oder Behälterfach gelagert werden, dies jedoch nicht zwingend bedeutet, dass die Waren in dem Behälter oder Behälterfach artikelrein im Hinblick auf die Warentypen der Waren gelagert werden. Selbstverständlich wäre aber auch eine artikelreine Lagerung der Waren pro Behälter oder Behälterfach möglich.

"Artikelrein" bedeutet, dass die in einem Behälter gelagerten Waren dieselbe Warentype aufweisen. Beispielsweise enthält ein erster Behälter Waren der Warentype "A" und ein zweiter Behälter Waren der Warentype "B" usw. Möglich ist auch, dass die Behälter durch Trennwände in mehrere Behälterfächer unterteilt werden und unterschiedliche Warentypen aufnehmen, wobei im ersten Behälterfach Waren der Warentype "A" und im zweiten Behälterfach Waren der Warentype "B" aufgenommen werden können. In jedem Behälterfach sind gemäß der vorgeschlagenen Ausführungsvariante jedoch Waren einer einzigen Greifbarkeitstype gelagert.

Es sei hingewiesen, dass auch ein Tablar oder Karton als Behälter angesehen werden kann. Allgemein bilden die Behälter Ladehilfsmittel zum Transport von Waren.

Günstig ist es weiterhin, wenn die automatische Sortiervorrichtung ein fahrerloses Transportsystem mit einem oder mehreren autonom bewegbaren Transportfahrzeuge umfasst, wobei die Transportfahrzeuge jeweils eine Aufnahmeplattform oder eine Hängestange aufweisen, auf welcher die Ware mit oder ohne Behälter oder mit oder ohne Hängetasche gelagert wird. Auf diese Weise kann eine besonders flexible Sortiervorrichtung aufgebaut werden. Ein autonom bewegbares Transportfahrzeug der verwendeten Art ist auch unter dem Begriff "autonomous guided vehicle" (kurz "AGV") oder "autonomous mobile robot" (kurz "AMR") bekannt. Die Transportfahrzeuge können nicht nur als (dedizierte) Sortiervorrichtung aufgefasst werden, sondern auch allgemein als Teil der Fördereinrichtung.

Zum besseren Verständnis der Erfindung wird diese anhand der nachfolgenden Figuren näher erläutert.

Es zeigen jeweils in stark vereinfachter, schematischer Darstellung:
- Fig. 1: eine Schrägansicht eines Ausschnitts aus einem ersten Beispiel eines Lager- und Kommissioniersystems;
- Fig. 2: eine Schrägansicht eines Ausschnitts aus einem zweiten Beispiel eines Lager- und Kommissioniersystems;
- Fig. 3: eine schematisierte Draufsicht auf das in Fig. 2 dargestellte Lager- und Kommissioniersystem;
- Fig. 4: eine schematisierte Draufsicht auf einen Ausschnitt aus einem Lager- und Kommissioniersystem mit einer automatischen Sortiervorrichtung;
- Fig. 5: eine schematisierte Draufsicht auf einen Ausschnitt aus einem Lager- und Kommissioniersystem mit einer Sortiervorrichtung, die autonom bewegbare Transportfahrzeuge umfasst;
- Fig. 6: ein autonom bewegbares Transportfahrzeug eines Transportsystems, in Schrägansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

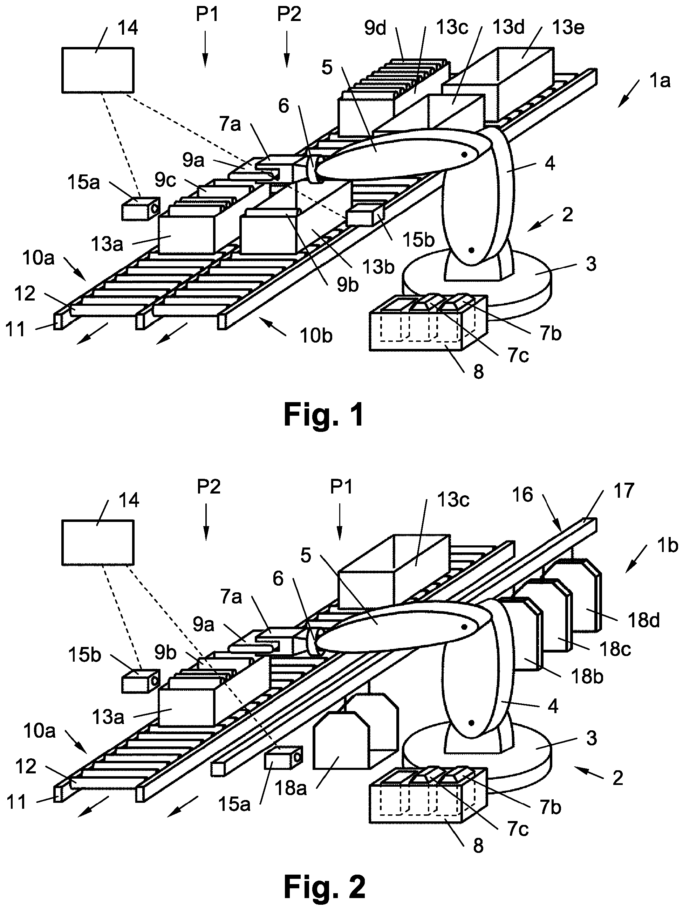

Die Fig. 1 zeigt eine Schrägansicht eines Ausschnitts aus einem ersten Beispiel für ein Lager- und Kommissioniersystem 1a. Das Lager- und Kommissioniersystem 1a umfasst einen Roboter 2, welcher in diesem Beispiel eine Roboterbasis 3, ein erstes bewegliches Armsegment 4, ein zweites bewegliches Armsegment 5 sowie einen am zweiten Armsegment 5 angeordneten Roboterkopf 6 aufweist. An den Roboterkopf 6 können verschiedene Greifer 7a..7c angekoppelt werden. Konkret ist in dem in Fig. 1 dargestellten Zustand ein Greifer 7a an den Roboterkopf 6 angekoppelt, zwei weitere Greifer 7b, 7c befinden sich dagegen in einem Greifermagazin 8 im Wirkungsbereich des Roboters 2. Mit den Greifern 7a..7c kann der Roboter 2 unterschiedliche Waren 9a..9d greifen beziehungsweise aufnehmen.

Die Waren 9a..9d werden in dem in Fig. 1 gezeigten Beispiel mit Hilfe einer Behälter-Fördereinrichtung 10a, welche mehrere zwischen zwei Rahmenprofilen 11 angeordnete Förderrollen 12 aufweist, zu einer ersten Position P1 in einem Wirkungsbereich des Roboters 2 antransportiert. Weiterhin weist das Lager- und Kommissioniersystem 1a eine weitere Behälter-Fördereinrichtung 10b auf, welche ebenfalls mehrere zwischen zwei Rahmenprofilen 11 angeordnete Förderrollen 12 aufweist. Auf den Behälter-Fördereinrichtungen 10a, 10b werden die Waren 9a..9d mit Hilfe von Behältern 13a..13e transportiert. Konkret dient die Fördereinrichtung 10a dem Antransport der Waren 9a..9d in Behältern 13a, 13c, beispielsweise aus einem Lagerbereich, und die Fördereinrichtung 10b dem Antransport von Leer-Behältern 13d, 13d und dem Abtransport von befüllten Behältern 13b beispielsweise zu einem Warenausgang. Die Behälter 13a, 13c bilden in dem gezeigten Beispiel also Quell-Ladehilfsmittel, die Behälter 13b, 13d, 13e Ziel-Ladehilfsmittel.

Das Lager- und Kommissioniersystem 1a umfasst weiterhin ein elektronisches Steuerungssystem 14, welches dazu eingerichtet ist, Greifbarkeitstypen zu den verschiedenen Waren 9a..9d zu erfassen, wobei die Greifbarkeitstype angibt, mit welchem Greifer 7a..7c entsprechend welcher Greifertype das Greifen der jeweilige Ware 9a..9d ermöglicht ist. Das Steuerungssystem 14 ist mit einem ersten RFID-Lesegerät 15a verbunden, mit dessen Hilfe ein Behälter 13a, 13c und damit die darin befindliche Ware 9a..9d identifiziert werden kann. Das Ergebnis der Identifikation kann für den Kommissioniervorgang und/oder für das Auslösen eines Greiferwechsels verwendet werden. Die einer Ware 9a..9d zugeordnete Greifbarkeitstype kann beispielsweise in einer Datenbank gespeichert und vom Steuerungssystem 14 aus dieser ausgelesen werden. Beispielsweise kann die einer Ware 9a..9d zugeordnete Greifbarkeitstype in den Stammdaten zu einer Ware 9a..9d hinterlegt sein, insbesondere zusätzlich zu weiteren Daten, welche einen Warentyp der Ware charakterisieren. Bei dem Steuerungssystem 14 handelt es sich insbesondere um ein übergeordnetes Steuerungssystem und nicht zwangsläufig um die Robotersteuerung des Roboters 2.

Anstelle eines auf einem Behälter 13a..13e angeordneten RFID-Tags kann der Behälter 13a..13e zum selben Zweck auch einen Barcode, Matrixcode, insbesondere ein QR-Code (Quick-Response-Code) oder Data Matrix-Code aufweisen.

Das Lesegerät kann auch ein optisches oder opto-elektronisches Lesegerät sein, mit dem die Daten maschinell gelesen werden können. Der Datenträger kann Daten enthalten, insbesondere eine Identifikationsnummer, anhand der auf die Stammdaten, in welchen die Greifbarkeitstype zu dieser Ware 9a..9d gespeichert ist, zurückgegriffen werden kann.

Der Datenträger kann aber auch die Daten über die Greifbarkeitstype direkt enthalten. Insbesondere enthalten die Daten eine Identifikationsnummer und die Daten über die Greifbarkeitstype.

Das Erfassen der Greifbarkeitstype einer Ware 9a..9d kann aber auch durch Erkennen der Ware 9a..9d mit Mitteln der "Objekterkennung" erfolgen. Die Objekterkennung beschreibt ein Verfahren zum Identifizieren eines Objektes mittels optischer, akustischer oder anderer physikalischer Erkennungsverfahren. Insbesondere kann nach einem Identifizieren der Ware 9a..9d durch Objekterkennung auf die Stammdaten zurückgegriffen werden, in welchen die Greifbarkeitstype zu dieser Ware gespeichert ist.

Das Steuerungssystem 14 ist weiter dazu eingerichtet, einen am Roboter 2 bereitgestellten Greifer 7a..7c aus den unterschiedlichen Greifertypen abhängig von der Greifbarkeitstype der umzuladenden Ware 9a..9d auszuwählen und ein Koppeln des gewählten Greifers 7a mit dem Roboterkopf 6 oder ein Aktivieren des gewählten Greifers 7a auf dem Roboterkopf 6 auszulösen.

Mit dem Roboter 2 kann die Ware 9a..9d mit dem ausgewählten Greifer 7a an der ersten Position P1 in dem Wirkungsbereich des Roboters 2 gegriffen und an einer zweiten Position P2 im Wirkungsbereich des Roboters 2 abgelegt werden. Konkret werden Waren 9a..9d aus den an der ersten Position P1 bereitgestellten Behältern 13a, 13c entnommen und in die an der zweiten Position P2 bereitgestellten Behältern 13b, 13d, 13e abgelegt. Beispielsweise kann auf diese Weise ein Kommissionierverfahren realisiert werden, wobei die Behälter 13a, 13c Quell-Behälter (z.B. Lagerbehälter) und die Behälter 13b, 13d, 13e Ziel-Behälter (z.B. Versandbehälter bzw. Versandkarton) bilden. Die in Fig. 1 dargestellte Anordnung kann sich aber auch am Wareneingang befinden. In diesem Fall ist die Behälter-Fördereinrichtung 10a mit dem Wareneingang verbunden und die Behälter-Fördereinrichtung 10b mit einem Lagerbereich. Auf diese Weise kann die einzulagernde Ware vor dem Einlagern sortiert werden. Zur Identifikation der Ziel-Behälter 13b, 13d, 13e kann das Steuerungssystem 14 mit einem zweiten RFID-Lesegerät 15b verbunden sein.

Günstig ist es, wenn in jedem Quell-Behälter 13a, 13c nur Waren 9a..9d einer einzigen Greifbarkeitstype gelagert werden. Dadurch wird vermieden, dass bei der Entnahme von Waren 9a..9d aus einem Behälter 13a, 13c ein Wechsel des Greifers 7a..7c erforderlich ist. Bei fachunterteilten Behältern kann überdies vorgesehen sein, dass in jedem Behälterfach des Behälters 13a, 13c Waren 9a..9d einer einzigen Greifbarkeitstype gelagert werden. Dadurch wird vermieden, dass bei der Entnahme von Waren 9a..9d aus einem Behälterfach ein Wechsel des Greifers 7a..7c erforderlich ist.

Gemäß der Erfindung ist eine (automatisiert betriebene) Fördertechnik, insbesondere die oben beschriebene Behälter-Fördereinrichtung 10a, vorgesehen, welche dazu ausgebildet ist, dem Roboter 2 die Waren 9a..9d getrennt nach Warengruppen G1..G3 zuzuführen, wobei vorerst die Waren 9a, 9c einer ersten Warengruppe G1 an der ersten Position P1 und danach die Waren 9d einer zweiten Warengruppe G2 an der ersten Position P1 bereitgestellt werden.

Die erste Warengruppe G1 umfasst dabei (unterschiedlichen) Waren 9a, 9c einer ersten Greifbarkeitstype der Greifbarkeitstypen, welche mit dem Greifer 7a einer ersten Greifertype an der ersten Position P1 ergriffen und an der zweiten Position P2 abgegeben werden können. Die zweite Warengruppe G2 umfasst (gleiche) Waren 9d einer zweiten Greifbarkeitstype der Greifbarkeitstypen, welche mit dem Greifer 7b einer zweiten Greifertype an der ersten Position P1 ergriffen und an der zweiten Position P2 abgegeben werden können. Mit anderen Worten sind nach diesem Ausführungsbeispiel einerseits die Waren 9a, 9c der ersten Greifbarkeitstype zugeordnet und bilden die ersten Warengruppe G1 (in der Fig. 1 nicht eingetragen) und andererseits sind die Waren 9d der zweiten Greifbarkeitstype zugeordnet und bilden die zweite Warengruppe G2 (in der Fig. 1 nicht eingetragen). Es ist demnach ein Greiferwechsel erforderlich, nachdem die Waren 9a, 9c an der zweiten Position P2 abgegeben worden sind.

Sind hingegen die (unterschiedlichen) Waren 9a, 9c, 9d alle einer ersten Greifbarkeitstype der Greifbarkeitstypen zugeordnet, werden die Behälter 13a, 13c nacheinander an der ersten Position P1 bereitgestellt, und die Waren 9a, 9c, 9d werden ohne Greiferwechsel manipuliert. Die Waren 9a, 9c, 9d werden dabei alle mit dem Greifer 7a einer ersten Greifertype an der ersten Position P1 ergriffen und an der zweiten Position P2 abgegeben. Mit anderen Worten sind nach diesem Ausführungsbeispiel die Waren 9a, 9c, 9d der ersten Greifbarkeitstype zugeordnet und bilden die ersten Warengruppe G1 (in der Fig. 1 nicht eingetragen).

Fig. 2 zeigt eine Ausführungsform eines weiteren Lager- und Kommissioniersystems 1b, das dem in Fig. 1 dargestellten Lager- und Kommissioniersystem 1a sehr ähnlich ist. Im Unterschied dazu ist anstelle der zweiten Behälter-Fördereinrichtung 10b jedoch eine Hänge-Fördereinrichtung 16 mit einem Trägerprofil 17 und entlang von diesem bewegbare Hängetaschen 18a..18d, die zur ersten Position P1 antransportiert und von dieser abtransportiert werden können. Eine mögliche Ausführung einer Hänge-Fördereinrichtung ist in der WO 2020/150762 A1 beschrieben. Die Hängetaschen 18a..18d bilden bei der gezeigten Ausführungsform die Quell-Ladehilfsmittel, die Behälter 13a, 13c die Ziel-Ladehilfsmittel. Günstig ist es, wenn in jeder Hängetasche 18a..18d nur eine einzige Ware 9a..9d (nicht dargestellt) gelagert wird. Durch diese Maßnahmen wird die Entnahme der Ware 9a..9d aus der Hängetasche 18a..18d erleichtert.

In Fig. 2 kann man erkennen, dass die Hängetasche 18a zur ersten Position P1 antransportiert wurde und dort bereitgestellt wird. Die Hängetasche 18a ist in eine Öffnungsstellung umgestellt, in welcher der Roboter 2 mit dem Greifer 7a in einen Aufbewahrungsraum in der Hängetasche 18a bewegt und die Ware 9a greifen / entnehmen kann. In dem in Fig. 2 dargestellten Zustand wurde die Ware 9a bereits vom Aufbewahrungsraum entnommen und wird in den Behälter 13a abgegeben, welcher sich in der zweiten Position P2 befindet. Im Behälter 13a befinden sich zudem bereits zuvor abgelegte Waren 9b. Die beladenen Hängetaschen 18b..18d sind in eine Schließstellung umgestellt, in welcher die Waren (in der Fig. 2 nicht sichtbar) in einem Aufbewahrungsraum gelagert sind, und werden nacheinander zur ersten Position P1 antransportiert.

Die in Fig. 2 dargestellte Anordnung kann wiederum an einer Kommissionierstation angeordnet sein oder beispielsweise am Wareneingang.

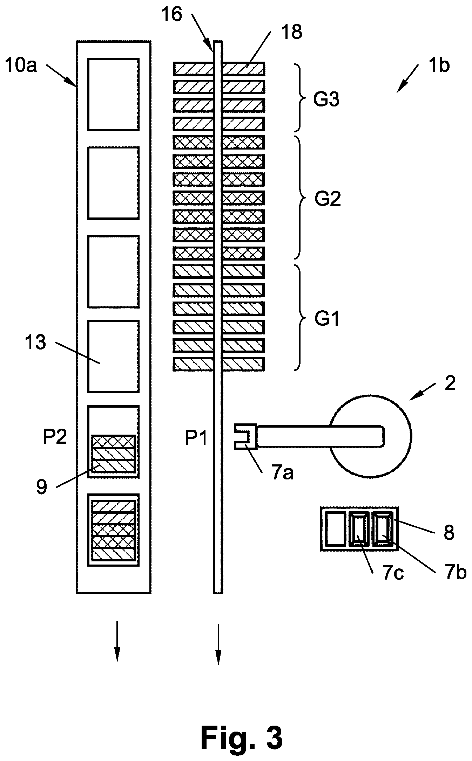

Fig. 3 zeigt eine schematisierte Draufsicht auf die in Fig. 2 offenbarte Anordnung, in der die Hängetaschen 18 je nach der Greifbarkeitstype der in den Hängetaschen 18 enthaltenen Waren 9 unterschiedlich schraffiert und nach Warengruppen G1..G3 sortiert sind.

Gemäß der Erfindung ist eine (automatisiert betriebene) Fördertechnik, insbesondere die oben beschriebene Hänge-Fördereinrichtung 16 vorgesehen, welche dazu ausgebildet ist, dem Roboter 2 die Waren 9 getrennt nach Warengruppen G1..G3 zuzuführen, wobei vorerst die Waren 9 einer ersten Warengruppe G1 an der ersten Position P1 und danach die Waren 9 einer zweiten Warengruppe G2 an der ersten Position P1 bereitgestellt werden, usw.

Mit dem Wechsel von einer Warengruppe G1 auf eine andere Warengruppe G2 ist ein Greiferwechsel erforderlich. Innerhalb einer Warengruppe G1 können wiederum gleiche oder unterschiedliche Waren 9 mit einer Greifbarkeitstype vorhanden sein.

Nach gezeigter Ausführung sind in der ersten Warengruppe G1 gleichartige Waren einer ersten Greifbarkeitstype, in der zweiten Warengruppe G2 gleichartige Waren einer zweiten Greifbarkeitstype und in der dritten Warengruppe G3 gleichartige Waren einer dritten Greifbarkeitstype vorhanden.

Zum Greifen der Ware 9 der ersten Warengruppe G1 wird der Greifer 7a der ersten Greifertype verwendet, und die Waren 9 werden mit diesem bevorzugt nacheinander an der ersten Position P1 gegriffen und an der zweiten Position P2 abgegeben.

Zum Greifen der Ware 9 in der zweiten Warengruppe G2 wird der Greifer 7b der zweiten Greifertype verwendet, und die Waren 9 werden mit diesem bevorzugt nacheinander an der ersten Position P1 gegriffen und an der zweiten Position P2 abgegeben.

Zum Greifen der Ware 9 in der dritten Warengruppe G3 wird der Greifer 7c der dritten Greifertype verwendet, und die Waren 9 werden mit diesem bevorzugt nacheinander an der ersten Position P1 gegriffen und an der zweiten Position P2 abgegeben.

Ein Verfahren zum Betreiben eines Roboters 2 zum Umladen von verschiedenen Waren 9, 9a..9d in einem Lager- und Kommissioniersystem 1a weist zusammenfassend die folgenden Schritte auf:
a) Erfassen von Greifbarkeitstypen zu den verschiedenen Waren 9, 9a..9d an dem elektronischen Steuerungssystem 14, wobei die Greifbarkeitstype angibt, mit welchem Greifer 7a..7c entsprechend welcher Greifertype das Greifen der jeweiligen Ware 9, 9a..9d ermöglicht ist,
b) Bereitstellen von Greifern 7a..7c unterschiedlicher Greifertype an dem Roboter 2,
c) Auswahl eines Greifers 7a..7c aus den unterschiedlichen Greifertypen abhängig von der Greifbarkeitstype der umzuladenden Ware 9, 9a..9d durch das elektronische Steuerungssystem 14,
d) Koppelung des ausgewählten Greifers 7a..7c mit dem Roboterkopf 6 des Roboters 2 oder Aktivieren des ausgewählten Greifers 7a..7c auf dem Roboterkopf 6 des Roboters 2,
e) Bereitstellen der Waren 9, 9a..9d an der ersten Position P1 in einem Wirkungsbereich des Roboters 2, und
f) Greifen der Ware 9, 9a..9d an der ersten Position P1 und Abgeben der Ware 9, 9a..9d an der zweiten Position P2 im Wirkungsbereich des Roboters 2 mit dem ausgewählten Greifer 7a..7c am Roboter 2.

Zusätzlich erfolgt ein Sortieren der unterschiedlichen Waren 9, 9a..9d zu Warengruppen G1..G3 je nach Greifbarkeitstype, wovon nach diesem Ausführungsbeispiel eine erste Warengruppe G1 Waren 9, 9a..9d einer ersten Greifbarkeitstype der Greifbarkeitstypen und eine zweite Warengruppe G2 Waren 9, 9a..9d einer zweiten Greifbarkeitstype der Greifbarkeitstypen und eine dritte Warengruppe G3 Waren 9, 9a..9d einer dritten Greifbarkeitstype der Greifbarkeitstypen umfassen, und es erfolgt eine Zuführung der Waren 9, 9a..9d zu dem Roboter 2 getrennt nach den Warengruppen G1..G3, sodass vorerst die Waren 9, 9a..9d der ersten Warengruppe G1 an der ersten Position P1 und danach die Waren 9, 9a..9d der zweiten Warengruppe G2 an der ersten Position P1 und schließlich die Waren 9, 9a..9d der dritten Warengruppe G3 an der ersten Position P1 bereitgestellt werden.

Es sei erwähnt, dass ein Sortieren auch zu mehr als drei Warengruppen G1..G3 möglich ist, zumindest aber zu zwei Warengruppen G1..G2 erfolgt.

Durch Bildung der Warengruppen G1..G3 kann die Anzahl an Greiferwechsel auf ein Minimum reduziert werden, selbst wenn ein extrem breites Warensortiment und damit verbunden eine hohe Anzahl an verschiedenen Waren 9, 9a..9d vorliegt. Je höher die Anzahl der Waren 9, 9a..9d in einer Warengruppe G1..G3 ist, desto seltener ist auch ein Greiferwechsel notwendig.

Die unterschiedlichen Arten der Greifer 7a..7c werden durch den jeweils zugeordneten "Greifertyp" beschrieben. Greifer 7a..7c können beispielsweise kraftschlüssig wirkende Greifer sein, formschlüssig wirkende Greifer oder können als Kombinationsgreifer ausgeführt sein. Die "Greifbarkeitstype" gibt jene Waren 9, 9a..9d an, die mit einem bestimmten Greifer 7a..7c entsprechend einer bestimmten Greifertype gegriffen werden können. Die Greifbarkeitstype ist gleichzeitig das Sortierkriterium für die Bildung einer Warengruppe G1..G3.

Einerseits können sich die unterschiedlichen Greifer 7a..7c in einem Greifermagazin 8 im Wirkungsbereich des Roboters 2 befinden und werden von dort nach Bedarf entnommen und mit dem Roboterkopf 6 verbunden, so wie das bei den in den Figuren dargestellten Beispielen der Fall ist. Andererseits können die Greifer 7a..7c aber auch dauerhaft am Roboterkopf 6 angeordnet sein und bei Bedarf aktiviert werden. Beispielsweise können sie in einem Revolvermagazin am Roboterkopf 6 angeordnet sein.

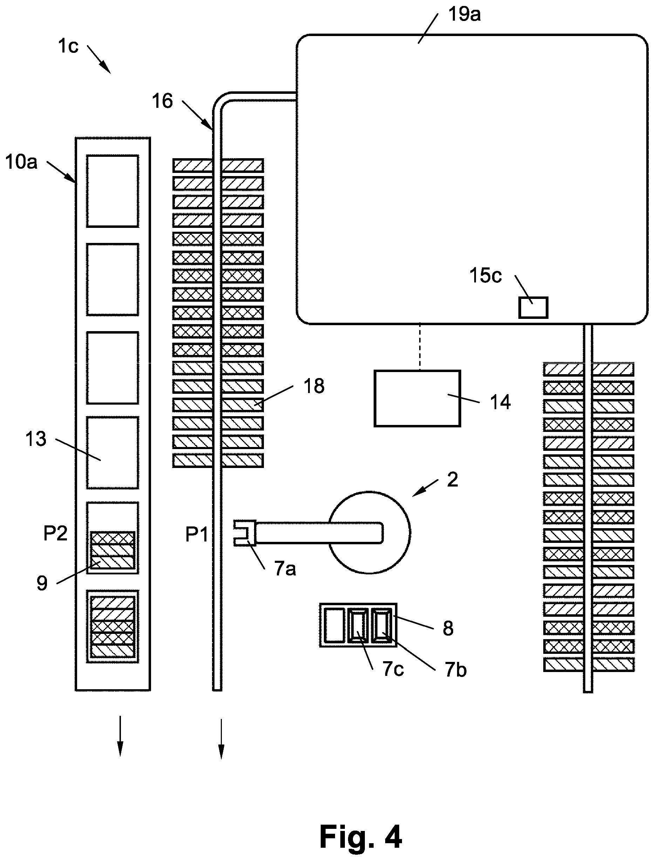

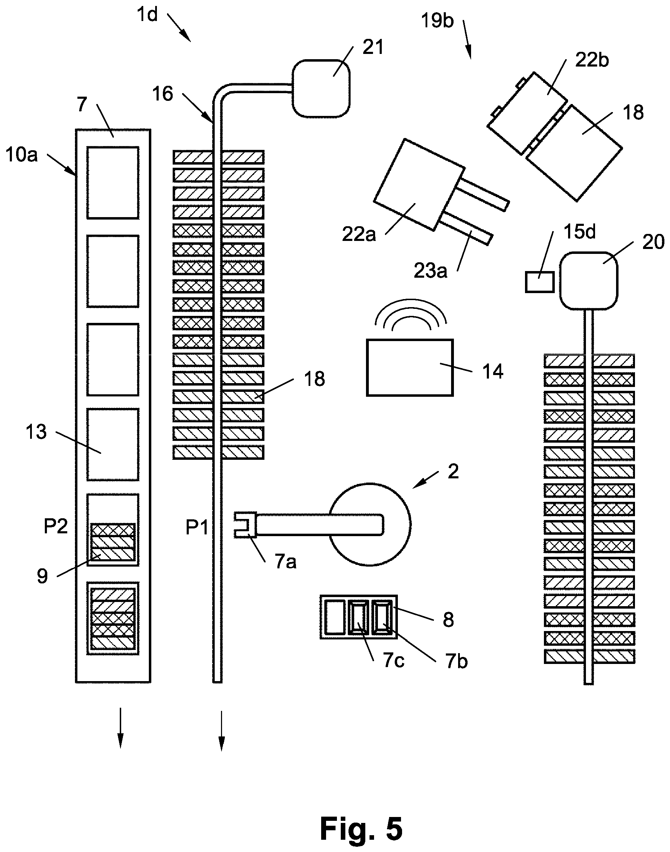

An dieser Stelle wird der Vollständigkeit halber angemerkt, dass das Lesegerät 15a nicht für die Bildung von Warengruppen G1..G3 eingesetzt werden kann, da es im Förderstrom zu weit stromabwärts angeordnet ist. Für die Bildung von Warengruppen G1..G3 erfolgt eine Warenidentifikation daher weiter stromaufwärts, so wie es beispielweise mit den Lesegeräten 15c, 15d in den Fig. 4 und 5 der Fall ist.

Fig. 4 zeigt eine schematisierte Draufsicht eines Ausschnitts aus einem Lager- und Kommissioniersystem 1c, das dem in Fig. 3 dargestellten Lager- und Kommissioniersystem 1b sehr ähnlich ist. Im Unterschied dazu umfasst das Lager- und Kommissioniersystem 1c eine automatische Sortiervorrichtung 19a auf Basis der Hängefördertechnik. Die Funktion einer Sortiervorrichtung 19a ist grundsätzlich bekannt, weswegen diese in der Fig. 4 nicht im Detail dargestellt ist. Aus der Fig. 4 ist erkennbar, dass die Waren 18 der Sortiervorrichtung 19a in ungeordnetem Zustand zugeführt werden, durch die Sortiervorrichtung 19a in Warengruppen G1..G3 sortiert und danach die Sortiervorrichtung 19a getrennt nach den Warengruppen G1..G3 verlassen (vergleiche dazu auch die Darstellung in Fig. 3). Das Steuerungssystem 14 ist hierzu mit der automatischen Sortiervorrichtung 19a verbunden, um diese anzusteuern. Die automatischen Sortiervorrichtung 19a umfasst weiterhin auch ein RFID-Lesegerät 15c zur Identifizierung der Waren 9, 9a..9d. Durch eine automatische Sortierung wird eine besonders hohe Sortierleistung erreicht, und es wird damit eine unterbrechungsfreie Bereitstellung der Waren 9, 9a..9d an der ersten Position P1 ermöglicht. Die Sortiervorrichtung 19a kann eine oder mehrere Sortierstufen umfassen, die fördertechnisch miteinander verbunden sind. Beispielsweise kann die Sortiervorrichtung 19a durch einen Matrixsorter gebildet sein. Die Hängefördertechnik respektive die Hänge-Fördereinrichtung 16 kann auch insbesondere zum Transport der Hängetaschen 18, 18a..18d von der automatischen Sortiervorrichtung 19a in die erste Position P1 ausgebildet sein.

An dieser Stelle wird angemerkt, dass die automatische Sortiervorrichtung 19a auch auf Basis einer Behälterfördertechnik betrieben werden kann. Insbesondere wäre eine solche für eine Kombination mit dem in der Fig. 1 dargestellten Lager- und Kommissioniersystem 1a geeignet. Die Behälterfördertechnik respektive die Behälter-Fördereinrichtung 10a kann dann auch insbesondere zum Transport der Behälter 13a, 13c von der automatischen Sortiervorrichtung 19a in die erste Position P1 ausgebildet sein.

Darüber hinaus kann das Sortieren und Gruppieren der Waren 9, 9a..9d beispielsweise auch durch entsprechendes Auslagern der Waren 9, 9a..9d aus einem Lager des Lager- und Kommissioniersystems 1a..1c in der bestimmten Abfolge oder Gruppierung erfolgen, durch entsprechendes Ansteuern von Weichen und Zusammenführungen im Verlauf der Fördereinrichtung 10a, 16 und/oder durch Verwendung von Pufferplätzen im Verlauf der Fördereinrichtung 10a, 16.

Fig. 5 zeigt eine schematisierte Draufsicht eines Ausschnitts aus einem weiteren Lager- und Kommissioniersystem 1d, das dem in Fig. 4 dargestellten Lager- und Kommissioniersystem 1c sehr ähnlich ist. Nach dieser Ausführung ist eine automatische Sortiervorrichtung 19b vorgesehen, die eine Übernahmestelle 20, eine Übergabestelle 21 sowie ein fahrerloses Transportsystem mit einem oder mehreren autonom bewegbaren Transportfahrzeugen 22a, 22b umfasst. Die Transportfahrzeuge 22a, 22b weisen jeweils eine Aufnahmeplattform 23a, 23b oder eine Hängestange auf, auf welcher die Ware 9, 9a..9d mit oder ohne Behälter 13, 13a..13d oder mit oder ohne Hängetasche 18, 18a..18d gelagert wird. Die Transportfahrzeuge 22a, 22b nehmen die Ware 9, 9a..9d unsortiert an der Übernahmestelle 20 auf und geben diese in sortierter Reihenfolge an der Übergabestelle 21 wieder ab. Die automatische Sortiervorrichtung 19b umfasst demnach ein fahrerloses Transportsystem. Das Steuerungssystem 14 ist hierzu mit der automatischen Sortiervorrichtung 19b respektive mit den Transportfahrzeugen 22a, 22b verbunden, um diese anzusteuern. Die automatischen Sortiervorrichtung 19b umfasst an der Übernahmestelle 20 weiterhin auch ein RFID-Lesegerät 15d zur Identifizierung der Waren 9, 9a..9d. Durch die vorgeschlagenen Maßnahmen kann eine besonders flexible Sortiervorrichtung 19b aufgebaut werden. Die Transportfahrzeuge 22a, 22b können nicht nur als (dedizierte) Sortiervorrichtung 19b aufgefasst werden, sondern auch allgemein als Teil der Fördereinrichtung 16.

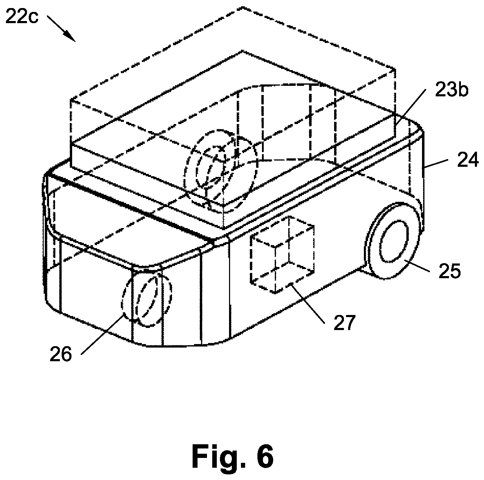

Fig. 6 zeigt schließlich eine mögliche Ausführung eines autonom bewegbaren Flurförderfahrzeugs 22c (engl.: "automated guided vehicle", kurz "AGV" oder "automated mobile robot", kurz "AMR"). Das autonome Flurförderfahrzeug 22c umfasst ein Fahrgestell 24 mit einer Antriebseinheit und eine auf dem Fahrgestell 24 angeordnete Warenaufnahme oder Ladeplattform 23b zur Aufnahme, Abgabe und zum Transport einer Ware 9, 9a..9d (in dieser Fig. nicht dargestellt) oder eines Behälters 13, 13a..13e (in dieser Fig. nicht dargestellt), in welchem die Ware 9, 9a..9d gelagert ist. Denkbar wäre auch, dass das autonome Flurförderfahrzeug 22c zusätzlich oder alternativ eine als Warenaufnahme fungierende Hängestange umfasst, mit der Hängetaschen 18, 18a..18d oder Hängewaren auf Warentransportträgern mit Kleiderbügeln oder Kleiderbügeln mit der Hängeware transportiert werden können.

Die Antriebseinheit umfasst an dem Fahrgestell 24 drehbar gelagerte Räder 25, 26, wovon zumindest eines der Räder 25 mit einem (nicht dargestellten) Antrieb gekoppelt ist, und zumindest eines der Räder 26 lenkbar ist. Es können auch beide Räder 25, 26 mit dem Antrieb gekoppelt und durch diesen angetrieben werden. Das autonome Flurförderfahrzeug 22c kann aber auch vier Räder umfassen, wovon zwei Räder lenkbar sind. Nach gezeigter Ausführung ist die Warenaufnahme 23b zwischen einer (in festen Linien eingetragenen) Ausgangsstellung und einer (in strichlierte Linien eingetragenen) Transportstellung verstellbar am Fahrgestell 24 gelagert.

In der Ausgangsstellung kann eine Ware 9, 9a..9d oder ein Behälter 13, 13a..13e unterfahren werden, um diese aufzunehmen. Wird die Warenaufnahme 23b aus der Ausgangsstellung in Richtung der Transportstellung verstellt, kann die Ware 9, 9a..9d oder der Behälter 13, 13a..13e angehoben und danach transportiert werden. Wird die Warenaufnahme 23b aus der Transportstellung wieder in Richtung der Ausgangsstellung verstellt, kann die Ware 9, 9a..9d oder der Behälter 13, 13a..13e wieder abgestellt oder abgegeben werden.

Das autonome Flurförderfahrzeug 22c umfasst ferner eine schematisch in strichlierte Linien dargestellte Steuerung 27 zum Steuern/Regeln der Bewegungen des autonomen Flurförderfahrzeugs 22c. Die Steuerung 27 kann auch Mittel zur (drahtlosen) Datenübertragung an das und von dem autonomen Flurförderfahrzeug 22c umfassen. Auf diese Weise kann das autonome Flurförderfahrzeug 22c respektive dessen Steuerung 27 mit dem Steuerungssystem 14 kommunizieren, das heißt Befehle von diesem empfangen und Daten an diesen übermitteln. Schließlich umfasst das autonome Flurförderfahrzeug 22c Sensoren zum Erfassen der Umgebung des autonomen Flurförderfahrzeugs 22c und zur Orientierung im Raum.

An dieser Stelle wird auch angemerkt, dass eine Sortierung der Waren 9, 9a..9d nach Warengruppen G1..G3 auch ohne automatischer Sortiervorrichtung 19a, 19b erfolgen kann, beispielsweise durch entsprechende automatische Auslagerung der Waren 9, 9a..9d (mit oder ohne Behälter) aus einem Lagerbereich.

Grundsätzlich kann ein Sortieren der unterschiedlichen Waren 9, 9a..9d zu Warengruppen G1..G3 je nach Greifbarkeitstype auch manuell erfolgen. Die erste Warengruppe G1 umfasst die Waren 9, 9a..9d einer ersten Greifbarkeitstype der Greifbarkeitstypen und eine zweite Warengruppe G2 umfasst die Waren 9, 9a..9d einer zweiten Greifbarkeitstype der Greifbarkeitstypen. Die Zuführung der Waren 9, 9a..9d zu dem Roboter 2 erfolgt getrennt nach den Warengruppen G1..G3, insbesondere durch die Fördertechnik, insbesondere die Behälter-Fördereinrichtung 10a und/oder die Hänge-Fördereinrichtung 16, sodass vorerst die Waren 9, 9a..9d der ersten Warengruppe G1 an der ersten Position P1 und danach die Waren 9, 9a..9d der zweiten Warengruppe G2 an der ersten Position P1 bereitgestellt werden.

Generell kann eine Reihung der Warengruppen G1..G3 abhängig von der Greifertype eines aktuell im Roboter 2 aktivierten oder gekoppelten Greifers 7a durchgeführt werden, wobei Waren 9, 9a..9d der ersten Warengruppe G1..G3 eine Greifbarkeitstype aufweisen, welcher der Greifertype des aktuell im Roboter 2 aktivierten oder gekoppelten Greifers 7a entspricht. In diesem Fall wird bei der Zuführung der Waren 9, 9a..9d zu dem Roboter 2 darauf geachtet, dass dem Roboter 2 zuerst jene Waren 9, 9a..9d angedient werden, welche von dem aktuell im Roboter 2 aktivierten Greifer 7a oder am Roboter 2 gekoppelten Greifer 7a gegriffen werden können. Auf diese Weise wird ein Greiferwechsel vorteilhaft vermieden.

Alternativ kann eine Reihung der Warengruppen G1..G3 aber auch unabhängig von der Greifertype des aktuell im Roboter 2 aktivierten oder gekoppelten Greifers 7a durchgeführt werden. In diesem Fall wird bei der Zuführung der Waren 9, 9a..9d zu dem Roboter 2 nicht darauf geachtet, dass dem Roboter 2 zuerst jene Waren 9, 9a..9d angedient werden, welche von dem aktuell im Roboter 2 aktivierten Greifer 7a oder am Roboter 2 gekoppelten Greifer 7a gegriffen werden können. Auf diese Weise ist ein Greiferwechsel für das Greifen von Waren 9, 9a..9d der ersten Warengruppe G1 unter Umständen erforderlich. Diese Variante des Verfahrens ist jedoch von Vorteil, wenn die Waren 9, 9a..9d der ersten Warengruppe G1 priorisiert bearbeitet werden sollen und ein möglicher Greiferwechsel in Kauf genommen wird.

Innerhalb einer Warengruppe G1..G3 können die Waren 9, 9a..9d im Hinblick auf eine Warentype der Waren 9, 9a..9d artikelrein sortiert oder chaotisch angeordnet werden. Eine artikelreine Sortierung ist beispielsweise an einem Wareneingang dann von Vorteil, wenn Waren artikelrein eingelagert werden sollen, oder auch für die Kommissionierung von Waren im B2B-Bereich, da hier häufig viele Waren 9, 9a..9d einer Warentype bestellt werden, die in Folge in einem Shop artikelrein eingelagert werden sollen. Eine chaotische Anordnung ist beispielsweise an einem Wareneingang dann von Vorteil, wenn Waren 9, 9a..9d chaotisch eingelagert werden sollen. Weiterhin ist diese Ausführungsvariante insbesondere bei der Kommissionierung von Waren 9, 9a..9d im E-Commerce- bzw. B2C-Bereich von Vorteil, da hier häufig wenige Waren 9, 9a..9d vieler unterschiedlicher Warentype bestellt werden, die als Block in einen Versandkarton gepackt werden.

An dieser Stelle wird angemerkt, dass die in der Fig. 1 dargestellte Bauform des Roboters 2 als Mehrachsroboter beziehungsweise Gelenkarmroboter rein beispielhaft ist. Stattdessen könnte der Roboter 2 auch als Portalroboter oder auch als Mischform der beiden Bauarten ausgebildet sein.

Abschließend wird weiterhin festgehalten, dass der Schutzbereich durch die Patentansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

- 1a..1d: Lager- und Kommissioniersystem (Ausschnitt)
- 2: Roboter
- 3: Roboterbasis
- 4: erstes Armsegment
- 5: zweites Armsegment

- 6: Roboterkopf
- 7a..7c: Greifer
- 8: Greifermagazin
- 9, 9a..9d: Ware
- 10a, 10b: Behälter-Fördereinrichtung /Rollenförderer

- 11: Rahmenprofil
- 12: Förderrolle
- 13, 13a..13e: Behälter
- 14: elektronisches Steuerungssystem
- 15a..15d: RFID-Lesegerät

- 16: Hänge-Fördereinrichtung
- 17: Trägerprofil
- 18, 18a..18d: Hängetasche
- 19a, 19b: automatische Sortiervorrichtung
- 20: Übernahmestelle

- 21: Übergabestelle
- 22a, 22b: autonomes Transportfahrzeug
- 23a, 23b: Aufnahmeplattform
- 24: Fahrgestell
- 25: Rad (angetrieben)

- 26: Rad (lenkbar)
- 27: Fahrsteuerung
- P1: erste Position
- P2: zweite Position
- G1..G3: Warengruppe

## Patentansprüche

1. Verfahren zum Betreiben eines Roboters (2) zum Umladen von verschiedenen Waren (9, 9a..9d) in einem Lager- und Kommissioniersystem (1a..1d), umfassend die Schritte
a) Erfassen von Greifbarkeitstypen zu den verschiedenen Waren (9, 9a..9d) an einem elektronischen Steuerungssystem (14), wobei die Greifbarkeitstype angibt, mit welchem Greifer (7a..7c) entsprechend welcher Greifertype das Greifen der jeweiligen Ware (9, 9a..9d) ermöglicht ist,
b) Bereitstellen von Greifern (7a..7c) unterschiedlicher Greifertype,
c) Auswahl eines Greifers (7a..7c) aus den unterschiedlichen Greifertypen abhängig von der Greifbarkeitstype der umzuladenden Ware (9, 9a..9d) durch das elektronische Steuerungssystem (14),
d) Koppelung des ausgewählten Greifers (7a..7c) mit einem Roboterkopf (6) des Roboters (2) oder Aktivieren des ausgewählten Greifers (7a..7c) auf einem Roboterkopf (6) des Roboters (2),
e) Bereitstellen der Waren (9, 9a..9d) an einer ersten Position (P1) in einem Wirkungsbereich des Roboters (2), und
f) Greifen der Ware (9, 9a..9d) an der ersten Position (P1) und Abgeben der Ware (9, 9a..9d) an einer zweiten Position (P2) im Wirkungsbereich des Roboters (2) mit dem ausgewählten Greifer (7a..7c) am Roboter (2),
**gekennzeichnet durch** die Schritte
Sortieren der unterschiedlichen Waren (9, 9a..9d) zu Warengruppen (G1..G3) je nach Greifbarkeitstype durch eine mit dem elektronischen Steuerungssystem (14) verbundene, automatische Sortiervorrichtung (19a, 19b), welche vom Steuerungssystem (14) angesteuert wird und welche eine Hängefördertechnik und Hängetaschen (18, 18a..18d) umfasst, wobei in jeder Hängetasche (18, 18a..18d) nur eine einzige Ware (9, 9a..9d) gelagert wird und wobei eine erste Warengruppe (G1) der Warengruppen (G1..G3) Waren (9, 9a..9d) einer ersten Greifbarkeitstype der Greifbarkeitstypen und eine zweite Warengruppe (G2) der Warengruppen (G1..G3) Waren (9, 9a..9d) einer zweiten Greifbarkeitstype der Greifbarkeitstypen umfassen, und
Zuführung der Waren (9, 9a..9d) zu dem Roboter (2) getrennt nach den Warengruppen (G1..G3), sodass vorerst die Waren (9, 9a..9d) der ersten Warengruppe (G1) an der ersten Position (P1) und danach die Waren (9, 9a..9d) der zweiten Warengruppe (G2) an der ersten Position (P1) bereitgestellt werden.

2. Verfahren nach Anspruch 1, **dadurch gekennzeichnet, dass** die Waren (9, 9a..9d) innerhalb einer Warengruppe (G1..G3) im Hinblick auf eine Warentype der Waren (9, 9a..9d) artikelrein sortiert werden.

3. Verfahren nach Anspruch 1, **dadurch gekennzeichnet, dass** die Waren (9, 9a..9d) innerhalb einer Warengruppe (G1..G3) im Hinblick auf eine Warentype der Waren (9, 9a..9d) chaotisch angeordnet werden.

4. Verfahren nach einem der Ansprüche 1 bis 3, **dadurch gekennzeichnet, dass** eine Reihung der Warengruppen (G1..G3) abhängig von der Greifertype eines aktuell im Roboter (2) aktivierten oder gekoppelten Greifers (7a..7c) durchgeführt wird, wobei Waren (9, 9a..9d) der ersten Warengruppe (G1..G3) eine Greifbarkeitstype aufweisen, welcher der Greifertype des aktuell im Roboter (2) aktivierten oder gekoppelten Greifers (7a..7c) entspricht.

5. Verfahren nach einem der Ansprüche 1 bis 3, **dadurch gekennzeichnet, dass** eine Reihung der Warengruppen (G1..G3) unabhängig von der Greifertype des aktuell im Roboter (2) aktivierten oder gekoppelten Greifers (7a..7c) durchgeführt wird.

6. Verfahren zum Betreiben eines Roboters (2) zum Umladen von verschiedenen Waren (9, 9a..9d) in einem Lager- und Kommissioniersystem (1a..1d), umfassend die Schritte
a) Erfassen von Greifbarkeitstypen zu den verschiedenen Waren (9, 9a..9d) an einem elektronischen Steuerungssystem (14), wobei die Greifbarkeitstype angibt, mit welchem Greifer (7a..7c) entsprechend welcher Greifertype das Greifen der jeweiligen Ware (9, 9a..9d) ermöglicht ist,
b) Bereitstellen von Greifern (7a..7c) unterschiedlicher Greifertype,
c) Auswahl eines Greifers (7a..7c) aus den unterschiedlichen Greifertypen abhängig von der Greifbarkeitstype der umzuladenden Ware (9, 9a..9d) durch das elektronische Steuerungssystem (14),
d) Koppelung des ausgewählten Greifers (7a..7c) mit einem Roboterkopf (6) des Roboters (2) oder Aktivieren des ausgewählten Greifers (7a..7c) auf einem Roboterkopf (6) des Roboters (2),
e) Bereitstellen der Waren (9, 9a..9d) an einer ersten Position (P1) in einem Wirkungsbereich des Roboters (2), und
f) Greifen der Ware (9, 9a..9d) an der ersten Position (P1) und Abgeben der Ware (9, 9a..9d) an einer zweiten Position (P2) im Wirkungsbereich des Roboters (2) mit dem ausgewählten Greifer (7a..7c) am Roboter (2),
**gekennzeichnet durch** die Schritte
Sortieren der unterschiedlichen Waren (9, 9a..9d) zu Warengruppen (G1..G3) je nach Greifbarkeitstype, wovon eine erste Warengruppe (G1) Waren (9, 9a..9d) einer ersten Greifbarkeitstype der Greifbarkeitstypen und eine zweite Warengruppe (G2) Waren (9, 9a..9d) einer zweiten Greifbarkeitstype der Greifbarkeitstypen umfassen, und
Zuführung der Waren (9, 9a..9d) zu dem Roboter (2) getrennt nach den Warengruppen (G1..G3), sodass vorerst die Waren (9, 9a..9d) der ersten Warengruppe (G1) an der ersten Position (P1) und danach die Waren (9, 9a..9d) der zweiten Warengruppe (G2) an der ersten Position (P1) bereitgestellt werden, wobei
A) Waren (9, 9a..9d) innerhalb einer Warengruppe (G1..G3) im Hinblick auf eine Warentype der Waren (9, 9a..9d) artikelrein sortiert werden, wenn das Verfahren an einem Wareneingang ausgeführt wird und Waren (9, 9a..9d) artikelrein im Lager- und Kommissioniersystem (1a..1d) eingelagert werden sollen oder wenn Waren (9, 9a..9d) im Business-to-Business-Bereich kommissioniert werden, und
B) Waren (9, 9a..9d) innerhalb einer Warengruppe (G1..G3) im Hinblick auf eine Warentype der Waren (9, 9a..9d) chaotisch angeordnet werden, wenn das Verfahren an einem Wareneingang ausgeführt wird und Waren (9, 9a..9d) chaotisch im Lager- und Kommissioniersystem (1a..1d) eingelagert werden sollen oder wenn Waren (9, 9a..9d) im Business-to-Consumer-Bereich kommissioniert werden.

7. Lager- und Kommissioniersystem (1a..1d), umfassend
einen Roboter (2) zum Umladen von Waren (9, 9a..9d), umfassend einen Roboterkopf (6) und zumindest zwei verschiedene an den Roboterkopf (6) abwechselnd ankoppelbare Greifer (7a..7c) oder zumindest zwei verschiedene auf dem Roboterkopf (6) angeordnete und wechselweise aktivierbare Greifer (7a..7c),
ein elektronisches Steuerungssystem (14), welches dazu eingerichtet ist, Greifbarkeitstypen zu den verschiedenen Waren (9, 9a..9d) zu erfassen, wobei die Greifbarkeitstype angibt, mit welchem Greifer (7a..7c) entsprechend welcher Greifertype das Greifen der jeweilige Ware (9, 9a..9d) ermöglicht ist, und welches weiter dazu eingerichtet ist, einen bereitgestellten Greifer (7a..7c) aus den unterschiedlichen Greifertypen abhängig von der Greifbarkeitstype der umzuladenden Ware (9, 9a..9d) auszuwählen und ein Koppeln des gewählten Greifers (7a..7c) mit dem Roboterkopf (6) oder ein Aktivieren des gewählten Greifers (7a..7c) auf dem Roboterkopf (6) auszulösen, und
eine Fördertechnik (10a, 16), welche dazu ausgebildet ist, Waren (9, 9a..9d) zu einer ersten Position (P1) in einem Wirkungsbereich des Roboters (2) anzutransportieren,
wobei der Roboter (2) dazu ausgebildet ist, die Ware (9, 9a..9d) mit dem ausgewählten Greifer (7a..7c) an der ersten Position (P1) in dem Wirkungsbereich des Roboters (2) zu greifen und die Ware (9, 9a..9d) an einer zweiten Position (P2) im Wirkungsbereich des Roboters (2) abzulegen,
**dadurch gekennzeichnet, dass**
die Fördertechnik (10a, 16) weiter dazu ausgebildet ist, dem Roboter (2) die Waren (9, 9a..9d) getrennt nach Warengruppen (G1..G3) zuzuführen, wobei vorerst die Waren (9, 9a..9d) einer ersten Warengruppe (G1) an der ersten Position (P1) und danach die Waren (9, 9a..9d) einer zweiten Warengruppe (G2) an der ersten Position (P1) bereitgestellt werden, wobei die erste Warengruppe (G1) Waren (9, 9a..9d) einer ersten Greifbarkeitstype der Greifbarkeitstypen und die zweite Warengruppe (G2) Waren (9, 9a..9d) einer zweiten Greifbarkeitstype der Greifbarkeitstypen umfasst, und
das Lager- und Kommissioniersystem eine mit der Fördertechnik (10a, 16) fördertechnisch verbundene, automatische Sortiervorrichtung (19a, 19b) oder eine die Fördertechnik (10a, 16) umfassende automatische Sortiervorrichtung (19a, 19b) umfasst, wobei die Sortiervorrichtung (19a, 19b) mit dem elektronischen Steuerungssystem (14) steuerungstechnisch verbunden ist und von dem Steuerungssystem (14) derart angesteuert wird, dass die unterschiedlichen Waren (9, 9a..9d) zu Warengruppen (G1..G3) je nach Greifbarkeitstype sortiert werden,
wobei die automatische Sortiervorrichtung (19a) eine Hängefördertechnik und Hängetaschen (18, 18a..18d) umfasst und wobei in jeder Hängetasche (18, 18a..18d) nur eine einzige Ware (9, 9a..9d) gelagert wird.

8. Lager- und Kommissioniersystem nach Anspruch 7, **dadurch gekennzeichnet, dass** die Fördertechnik eine Hängefördertechnik zum Transport der Hängetaschen (18, 18a..18d) von der automatischen Sortiervorrichtung (19a) in die erste Position (P1) umfasst oder durch eine solche Hängefördertechnik gebildet ist.

9. Lager- und Kommissioniersystem (1a..1d), umfassend
einen Roboter (2) zum Umladen von Waren (9, 9a..9d), umfassend einen Roboterkopf (6) und zumindest zwei verschiedene an den Roboterkopf (6) abwechselnd ankoppelbare Greifer (7a..7c) oder zumindest zwei verschiedene auf dem Roboterkopf (6) angeordnete und wechselweise aktivierbare Greifer (7a..7c),
ein elektronisches Steuerungssystem (14), welches dazu eingerichtet ist, Greifbarkeitstypen zu den verschiedenen Waren (9, 9a..9d) zu erfassen, wobei die Greifbarkeitstype angibt, mit welchem Greifer (7a..7c) entsprechend welcher Greifertype das Greifen der jeweilige Ware (9, 9a..9d) ermöglicht ist, und welches weiter dazu eingerichtet ist, einen bereitgestellten Greifer (7a..7c) aus den unterschiedlichen Greifertypen abhängig von der Greifbarkeitstype der umzuladenden Ware (9, 9a..9d) auszuwählen und ein Koppeln des gewählten Greifers (7a..7c) mit dem Roboterkopf (6) oder ein Aktivieren des gewählten Greifers (7a..7c) auf dem Roboterkopf (6) auszulösen, und
eine Fördertechnik (10a, 16), welche dazu ausgebildet ist, Waren (9, 9a..9d) zu einer ersten Position (P1) in einem Wirkungsbereich des Roboters (2) anzutransportieren,
wobei der Roboter (2) dazu ausgebildet ist, die Ware (9, 9a..9d) mit dem ausgewählten Greifer (7a..7c) an der ersten Position (P1) in dem Wirkungsbereich des Roboters (2) zu greifen und die Ware (9, 9a..9d) an einer zweiten Position (P2) im Wirkungsbereich des Roboters (2) abzulegen,
**dadurch gekennzeichnet, dass**
die Fördertechnik (10a, 16) weiter dazu ausgebildet ist, dem Roboter (2) die Waren (9, 9a..9d) getrennt nach Warengruppen (G1..G3) zuzuführen, wobei vorerst die Waren (9, 9a..9d) einer ersten Warengruppe (G1) an der ersten Position (P1) und danach die Waren (9, 9a..9d) einer zweiten Warengruppe (G2) an der ersten Position (P1) bereitgestellt werden, wobei die erste Warengruppe (G1) Waren (9, 9a..9d) einer ersten Greifbarkeitstype der Greifbarkeitstypen und die zweite Warengruppe (G2) Waren (9, 9a..9d) einer zweiten Greifbarkeitstype der Greifbarkeitstypen umfasst, und
das Lager- und Kommissioniersystem eine mit der Fördertechnik (10a, 16) fördertechnisch verbundene, automatische Sortiervorrichtung (19a, 19b) oder eine die Fördertechnik (10a, 16) umfassende automatische Sortiervorrichtung (19a, 19b) umfasst, wobei die Sortiervorrichtung (19a, 19b) mit dem elektronischen Steuerungssystem (14) steuerungstechnisch verbunden ist und von dem Steuerungssystem (14) derart angesteuert wird, dass die unterschiedlichen Waren (9, 9a..9d) zu Warengruppen (G1..G3) je nach Greifbarkeitstype sortiert werden, wobei die Sortiervorrichtung (19a, 19b) weiter dazu ausgebildet ist
A) Waren (9, 9a..9d) innerhalb einer Warengruppe (G1..G3) im Hinblick auf eine Warentype der Waren (9, 9a..9d) artikelrein zu sortieren, wenn das Umladen der Waren (9, 9a..9d) an einem Wareneingang ausgeführt wird und Waren (9, 9a..9d) artikelrein im Lager- und Kommissioniersystem (1a..1d) eingelagert werden sollen oder wenn Waren (9, 9a..9d) im Business-to-Business-Bereich kommissioniert werden, und
B) Waren (9, 9a..9d) innerhalb einer Warengruppe (G1..G3) im Hinblick auf eine Warentype der Waren (9, 9a..9d) chaotisch anzuordnen, wenn das Umladen der Waren (9, 9a..9d) an einem Wareneingang ausgeführt wird und Waren (9, 9a..9d) chaotisch im Lager- und Kommissioniersystem (1a..1d) eingelagert werden sollen oder wenn Waren (9, 9a..9d) im Business-to-Consumer-Bereich kommissioniert werden.

## Claims

1. An operating method of a robot (2) for transferring different goods (9, 9a..9d) in a storage and picking system (1a..1d), comprising the steps
a) acquiring grip types for the different goods (9, 9a..9d) in an electronic control system (14), wherein the grip type indicates with which gripper (7a..7c) corresponding to which gripper type gripping of the respective good (9, 9a..9d) is possible,
b) providing grippers (7a..7c) of different gripper types,
c) selecting a gripper (7a..7c) from the different gripper types depending on the grip type of the good (9, 9a..9d) to be transferred by the electronic control system (14),
d) coupling the selected gripper (7a..7c) to a robot head (6) of the robot (2) or activating the selected gripper (7a..7c) on a robot head (6) of the robot (2),
e) providing the goods (9, 9a..9d) at a first position (P1) in a region of action of the robot (2), and
f) gripping the good (9, 9a..9d) at the first position (P1) and depositing the good (9, 9a..9d) at a second position (P2) in the region of action of the robot (2) with the selected gripper (7a..c) of the robot (2),
**characterized by** the steps
sorting the different goods (9, 9a..9d) into groups of goods (G1..G3) depending on the grip type by an automatic sorting device (19a, 19b) connected to the electronic control system (14), wherein the automatic sorting device (19a, 19b) is controlled by the control system (14) and comprises an overhead conveyor system and hanging bags (18, 18a..18d), wherein only a single good (9, 9a..9d) is stored in each hanging bag (18, 18a..18d) and wherein a first group of goods (G1) of the groups of goods (G1..G3) comprises goods (9, 9a..9d) of a first grip type of the grip types and a second group of goods (G2) of the groups of goods (G1..G3) comprises goods (9, 9a..9d) of a second grip type of the grip types, and
supplying the goods (9, 9a..9d), separated into the groups of goods (G1..G3), to the robot (2) so that firstly the goods (9, 9a..9d) of the first group of goods (G1) are provided at the first position (P1) and subsequently the goods (9, 9a..9d) of the second group of goods (G2) are provided at the first position (P1).

2. The method according to claim 1, **characterized in that** the goods (9, 9a..9d) are sorted within a group of goods (G1..G3) according to a good type of the goods (9, 9a..9d) in a type-by-type manner.

3. The method according to claim 1, **characterized in that** the goods (9, 9a..9d) are arranged within a group of goods (G1..G3) according to a good type of the goods (9, 9a..9d) in a chaotic manner.

4. The method according to one of the claims 1 to 3, **characterized in that** sequencing of the groups of goods (G1..G3) is executed depending on the gripper type of a gripper (7a..7c) currently activated in or coupled to the robot (2), wherein goods (9, 9a..9d) of the first group of goods (G1..G3) have a grip type, which corresponds to the gripper type of the gripper (7a..7c) currently activated in or coupled to the robot (2).

5. The method according to one of the claims 1 to 3, **characterized in that** sequencing of the groups of goods (G1..G3) is executed independently of the gripper type of the gripper (7a..7c) currently activated in or coupled to the robot (2).

6. An operating method of a robot (2) for transferring different goods (9, 9a..9d) in a storage and picking system (1a..1d), comprising the steps
a) acquiring grip types for the different goods (9, 9a..9d) in an electronic control system (14), wherein the grip type indicates with which gripper (7a..7c) corresponding to which gripper type gripping of the respective good (9, 9a..9d) is possible,
b) providing grippers (7a..7c) of different gripper types,
c) selecting a gripper (7a..7c) from the different gripper types depending on the grip type of the good (9, 9a..9d) to be transferred by the electronic control system (14),
d) coupling the selected gripper (7a..7c) to a robot head (6) of the robot (2) or activating the selected gripper (7a..7c) on a robot head (6) of the robot (2),
e) providing the goods (9, 9a..9d) at a first position (P1) in a region of action of the robot (2), and
f) gripping the good (9, 9a..9d) at the first position (P1) and depositing the good (9, 9a..9d) at a second position (P2) in the region of action of the robot (2) with the selected gripper (7a..c) of the robot (2),
**characterized by** the steps
sorting the different goods (9, 9a..9d) into groups of goods (G1..G3) depending on the grip type of which a first group of goods (G1) comprises goods (9, 9a..9d) of a first grip type of the grip types and a second group of goods (G2) comprises goods (9, 9a..9d) of a second grip type of the grip types, and
supplying the goods (9, 9a..9d), separated into the groups of goods (G1..G3), to the robot (2) so that firstly the goods (9, 9a..9d) of the first group of goods (G1) are provided at the first position (P1) and subsequently the goods (9, 9a..9d) of the second group of goods (G2) are provided at the first position (P1), wherein
A) goods (9, 9a..9d) are sorted within a group of goods (G1..G3) according to a good type of the goods (9, 9a..9d) in a type-by-type manner when the method is executed at goods receipt and goods (9, 9a..9d) are to be stored in the storage and picking system (1a..1d) in a type-by-type manner or when goods (9, 9a..9d) are picked in the business-to-business sector, and
B) goods (9, 9a..9d) are arranged within a group of goods (G1..G3) according to a good type of the goods (9, 9a..9d) in a chaotic manner, when the method is executed at goods receipt and goods (9, 9a..9d) are to be stored in the storage and picking system (1a..1d) in a chaotic manner or when goods (9, 9a..9d) are picked in the business-to-consumer sector.

7. A storage and picking system (1a..1d) comprising
a robot (2) for transferring goods (9, 9a..9d) comprising a robot head (6) and at least two different grippers (7a..7c), which can be alternately coupled to the robot head (6) or at least two different grippers (7a..7c) arranged on the robot head, which can be activated alternately,
an electronic control system (14) configured to acquire the grip types for the different goods (9, 9a..9d), wherein the grip type indicates with which gripper (7a..7c) corresponding to which gripper type gripping of the respective good (9, 9a..9d) is possible, and further configured to select a provided gripper (7a..7c) from the different grip types depending on the grip type of the good to be transferred and trigger coupling of the selected gripper (7a..7c) to the robot head (6) or activating of the selected gripper (7a..7c) on the robot head (6), and
a conveyor system (10a, 16) configured to transport goods (9, 9a..9d) to a first position (P1) in a region of action of the robot (2),
wherein the robot (2) is configured to grip the good (9, 9a..9d) with the selected gripper (7a..7c) at the first position (P1) in the region of action of the robot (2) and to deposit the good (9, 9a..9d) at a second position (P2) in the region of action of the robot (2), **characterized in that**
the conveyor system (10a, 16) is further configured to supply the goods (9, 9a..9d), separated into groups of goods (G1..G3), to the robot (2), wherein firstly the goods (9, 9a..9d) of a first group of goods (G1) are provided at the first position (P1) and subsequently the goods (9, 9a..9d) of a second group of goods (G2) are provided at the first position (P1), wherein the first group of goods (G1) comprises goods (9, 9a..9d) of a first grip type of the grip types and the second group of goods (G2) comprises goods (9, 9a..9d) of a second grip type of the grip types, and
the storage and picking system comprises an automatic sorting device (19a, 19b) connected to the conveyor system (10a, 16) in terms of conveyance or an automatic sorting device (19a, 19b) comprising the conveyor system (10a, 16), wherein the sorting device (19a, 19b) is connected to the electronic control system (14) in a controllable manner and is controlled by the control system (14) in such a way that the different goods (9, 9a..9d) are sorted into groups of goods (G1..G3) depending on the grip type,
wherein the automatic sorting device (19a) comprises an overhead conveyor system and hanging bags (18, 18a..18d) and wherein only a single good (9, 9a..9d) is stored in each hanging bag (18, 18a..18d).

8. The storage and picking system (1a..1d) according to claim 7, **characterised in that** the conveyor system comprises an overhead conveyor system for transporting the hanging bags (18, 18a, 18d) from the automatic sorting device (19a) to the first position (P1) or is formed by such an overhead conveyor system.

9. A storage and picking system (1a..1d) comprising
a robot (2) for transferring goods (9, 9a..9d) comprising a robot head (6) and at least two different grippers (7a..7c), which can be alternately coupled to the robot head (6) or at least two different grippers (7a..7c) arranged on the robot head, which can be activated alternately,
an electronic control system (14) configured to acquire the grip types for the different goods (9, 9a..9d), wherein the grip type indicates with which gripper (7a..7c) corresponding to which gripper type gripping of the respective good (9, 9a..9d) is possible, and further configured to select a provided gripper (7a..7c) from the different grip types depending on the grip type of the good to be transferred and trigger coupling of the selected gripper (7a..7c) to the robot head (6) or activating of the selected gripper (7a..7c) on the robot head (6), and
a conveyor system (10a, 16) configured to transport goods (9, 9a..9d) to a first position (P1) in a region of action of the robot (2),
wherein the robot (2) is configured to grip the good (9, 9a..9d) with the selected gripper (7a..7c) at the first position (P1) in the region of action of the robot (2) and to deposit the good (9, 9a..9d) at a second position (P2) in the region of action of the robot (2), **characterized in that**
the conveyor system (10a, 16) is further configured to supply the goods (9, 9a..9d), separated into groups of goods (G1..G3), to the robot (2), wherein firstly the goods (9, 9a..9d) of a first group of goods (G1) are provided at the first position (P1) and subsequently the goods (9, 9a..9d) of a second group of goods (G2) are provided at the first position (P1), wherein the first group of goods (G1) comprises goods (9, 9a..9d) of a first grip type of the grip types and the second group of goods (G2) comprises goods (9, 9a..9d) of a second grip type of the grip types, and
the storage and picking system comprises an automatic sorting device (19a, 19b) connected to the conveyor system (10a, 16) in terms of conveyance or an automatic sorting device (19a, 19b) comprising the conveyor system (10a, 16), wherein the sorting device (19a, 19b) is connected to the electronic control system (14) in a controllable manner and is controlled by the control system (14) in such a way that the different goods (9, 9a..9d) are sorted into groups of goods (G1..G3) depending on the grip type, wherein the sorting device (19a, 19b) is further configured to
A) sort goods (9, 9a..9d) within a group of goods (G1..G3) according to a good type of the goods (9, 9a..9d) in a type-by-type manner when the method is executed at goods receipt and goods (9, 9a..9d) are to be stored in the storage and picking system (1a..1d) in a type-by-type manner or when goods (9, 9a..9d) are picked in the business-to-business sector, and
B) arrange goods (9, 9a..9d) within a group of goods (G1..G3) according to a good type of the goods (9, 9a..9d) in a chaotic manner, when the method is executed at goods receipt and goods (9, 9a..9d) are to be stored in the storage and picking system (1a..1d) in a chaotic manner or when goods (9, 9a..9d) are picked in the business-to-consumer sector.

## Revendications

1. Procédé de fonctionnement d'un robot (2) pour le déchargement de différentes marchandises (9, 9a..9d) dans un système d'entreposage et de préparation de commandes (1a..1d), comprenant les étapes suivantes :
a) Saisie des types de préhension pour les différentes marchandises (9, 9a..9d) sur un système de commande électronique (14), le type de préhension indiquant quel préhenseur (7a..7c), selon le type de préhenseur, rend possible la préhension de la marchandise respective (9, 9a..9d),
b) Mise à disposition de préhenseurs (7a..7c) pour de différents types,
c) Sélection d'un préhenseur (7a..7c) parmi les différents types de préhenseurs selon le type de préhension de la marchandise à décharger (9, 9a..9d) par le système de commande électronique (14),
d) Couplage du préhenseur sélectionné (7a..7c) avec une tête de robot (6) du robot (2) ou activation du préhenseur sélectionné (7a..7c) sur une tête de robot (6) du robot (2),
e) Mise à disposition des marchandises (9, 9a..9d) à une première position (P1) dans une zone d'action du robot (2), et
f) Préhension de la marchandise (9, 9a..9d) à la première position (P1) et dépose de la marchandise (9, 9a..9d) à une deuxième position (P2) dans la zone d'action du robot (2) avec le préhenseur sélectionné (7a..7c) sur le robot (2), **caractérisé par** les étapes suivantes :
Tri des différentes marchandises (9, 9a..9d) en groupes de marchandises (G1..G3) selon le type de préhension par un dispositif de tri automatique (19a, 19b) relié au système de commande électronique (14), lequel est commandé par le système de commande (14) et comprend une technique de suspension et des poches suspendues (18, 18a..18d), chaque poche suspendue (18, 18a..18d) ne contenant qu'une seule marchandise (9, 9a..9d), un premier groupe de marchandises (G1) des groupes de marchandises (G1..G3) comprenant des marchandises (9, 9a..9d) d'un premier type de préhension parmi les types de préhension et un deuxième groupe de marchandises (G2) des groupes de marchandises (G1..G3) comprenant des marchandises (9, 9a..9d) d'un deuxième type de préhension parmi les types de préhension, et
acheminement des marchandises (9, 9a..9d) vers le robot (2) séparément selon les groupes de marchandises (G1..G3), de sorte que dans un premier temps, les marchandises (9, 9a..9d) du premier groupe de marchandises (G1) sont mises à disposition à la première position (P1), puis les marchandises (9, 9a..9d) du deuxième groupe de marchandises (G2) sont mises à disposition à la première position (P1).

2. Procédé selon la revendication 1, **caractérisé en ce que** les marchandises (9, 9a..9d) sont triées à l'intérieur d'un groupe de marchandises (G1..G3) selon un type d'article des marchandises (9, 9a..9d) de façon homogène par article.

3. Procédé selon la revendication 1, **caractérisé en ce que** les marchandises (9, 9a..9d) sont agencées de manière chaotique à l'intérieur d'un groupe de marchandises (G1..G3) en ce qui concerne un type d'article des marchandises (9, 9a..9d).

4. Procédé selon l'une quelconque des revendications 1 à 3, **caractérisé en ce qu'**un ordonnancement des groupes de marchandises (G1..G3) est effectué en fonction du type de préhenseur du préhenseur (7a..7c) actuellement activé ou couplé sur le robot (2), les marchandises (9, 9a..9d) du premier groupe de marchandises (G1..G3) présentant un type de préhension correspondant au type de préhenseur du préhenseur (7a..7c) actuellement activé ou couplé sur le robot (2).

5. Procédé selon l'une quelconque des revendications 1 à 3, **caractérisé en ce qu'**un ordonnancement des groupes de marchandises (G1..G3) est effectué indépendamment du type de préhenseur du préhenseur (7a..7c) actuellement activé ou couplé sur le robot (2).

6. Procédé de fonctionnement d'un robot (2) pour le déchargement de différentes marchandises (9, 9a..9d) dans un système d'entreposage et de préparation de commandes (1a..1d), comprenant les étapes suivantes :
a) Saisie des types de préhension pour les différentes marchandises (9, 9a..9d) sur un système de commande électronique (14), le type de préhension indiquant quel préhenseur (7a..7c), selon le type de préhenseur, rend possible la préhension de la marchandise respective (9, 9a..9d),
b) Mise à disposition de préhenseurs (7a..7c) de différents types,
c) Sélection d'un préhenseur (7a..7c) parmi les différents types de préhenseurs selon le type de préhension de la marchandise à décharger (9, 9a..9d) par le système de commande électronique (14),
d) Couplage du préhenseur sélectionné (7a..7c) avec une tête de robot (6) du robot (2) ou activation du préhenseur sélectionné (7a..7c) sur une tête de robot (6) du robot (2),
e) Mise à disposition des marchandises (9, 9a..9d) à une première position (P1) dans une zone d'action du robot (2), et
f) Préhension de la marchandise (9, 9a..9d) à la première position (P1) et dépose de la marchandise (9, 9a..9d) à une deuxième position (P2) dans la zone d'action du robot (2) avec le préhenseur sélectionné (7a..7c) sur le robot (2), **caractérisé par** les étapes suivantes :
Tri des différentes marchandises (9, 9a..9d) en groupes de marchandises (G1..G3) selon le type de préhension, dont un premier groupe de marchandises (G1) comprend des marchandises (9, 9a..9d) d'un premier type de préhension parmi les types de préhension et un deuxième groupe de marchandises (G2) comprend des marchandises (9, 9a..9d) d'un deuxième type de préhension parmi les types de préhension, et
acheminement des marchandises (9, 9a..9d) vers le robot (2) séparément selon les groupes de marchandises (G1..G3), de sorte qu'en premier lieu les marchandises (9, 9a..9d) du premier groupe de marchandises (G1) sont mises à disposition à la première position (P1) puis les marchandises (9, 9a..9d) du deuxième groupe de marchandises (G2) sont mises à disposition à la première position (P1), dans lequel
A) les marchandises (9, 9a..9d) à l'intérieur d'un groupe de marchandises (G1..G3) sont triées de façon homogène par article en ce qui concerne un type d'article des marchandises (9, 9a..9d) lorsque le procédé est exécuté à une entrée de marchandises et que les marchandises (9, 9a..9d) doivent être stockées de façon homogène par article dans le système d'entreposage et de préparation de commandes (1a..1d) ou lorsque les marchandises (9, 9a..9d) sont préparées dans le secteur business-to-business, et
B) les marchandises (9, 9a..9d) à l'intérieur d'un groupe de marchandises (G1..G3) en ce qui concerne un type d'article des marchandises (9, 9a..9d) sont agencées de manière chaotique dans le système de stockage et de préparation de commandes (1a..1d), ou lorsque les marchandises (9, 9a..9d) sont préparées dans le secteur business-to-consumer.

7. Système de stockage et de préparation de commandes (1a..1d), comprenant
un robot (2) pour le déchargement de marchandises (9, 9a..9d), comprenant une tête de robot (6) et au moins deux préhenseurs différents (7a..7c) pouvant être accouplés alternativement à la tête de robot (6), ou au moins deux préhenseurs différents (7a..7c) agencés sur la tête de robot (6) et activables de manière alternée,
un système de commande électronique (14), qui est configuré pour saisir des types de préhensibilité associés aux différentes marchandises (9, 9a..9d), le type de préhensibilité indiquant quel préhenseur (7a..7c), selon le type de préhenseur, rend possible la préhension de la marchandise respective (9, 9a..9d) et qui est en outre configuré pour sélectionner, parmi les différents types de préhenseurs, un préhenseur disponible (7a..7c) selon le type de préhensibilité de la marchandise (9, 9a..9d) à décharger, et pour déclencher un accouplement du préhenseur sélectionné (7a..7c) avec la tête de robot (6) ou une activation du préhenseur sélectionné (7a..7c) sur la tête de robot (6), et
une technique de convoyage (10a, 16), qui est conçue pour transporter des marchandises (9, 9a..9d) vers une première position (P1) située dans une zone d'action du robot (2),
le robot (2) étant conçu pour saisir la marchandise (9, 9a..9d), au moyen du préhenseur sélectionné (7a..7c), à la première position (P1) dans la zone d'action du robot (2), et pour déposer la marchandise (9, 9a..9d) à une deuxième position (P2) dans la zone d'action du robot (2),
**caractérisé en ce que**
la technique de convoyage (10a, 16) est en outre conçue pour acheminer les marchandises (9, 9a..9d) vers le robot (2) séparément selon des groupes de marchandises (G1..G3), les marchandises (9, 9a..9d) d'un premier groupe de marchandises (G1) étant dans un premier temps mises à disposition à la première position (P1), puis les marchandises (9, 9a..9d) d'un deuxième groupe de marchandises (G2) étant mises à disposition à la première position (P1), le premier groupe de marchandises (G1) comprenant des marchandises (9, 9a..9d) d'un premier type de préhensibilité parmi les types de préhensibilité, et le deuxième groupe de marchandises (G2) comprenant des marchandises (9, 9a..9d) d'un deuxième type de préhensibilité parmi les types de préhensibilité, et
le système de stockage et de préparation de commandes comprend un dispositif de tri automatique (19a, 19b) relié techniquement, du point de vue du convoyage, à la technique de convoyage (10a, 16), ou un dispositif de tri automatique (19a, 19b) comprenant la technique de convoyage (10a, 16), le dispositif de tri (19a, 19b) étant relié au système de commande électronique (14) du point de vue de la commande et étant commandé par le système de commande (14) de telle sorte que les différentes marchandises (9, 9a..9d) soient triées en groupes de marchandises (G1..G3) selon le type de préhensibilité,
le dispositif de tri automatique (19a) comprenant une technique de convoyage suspendu et des poches suspendues (18, 18a..18d), et une seule marchandise (9, 9a..9d) étant stockée dans chaque poche suspendue (18, 18a..18d).

8. Système de stockage et de préparation de commandes selon la revendication 7, **caractérisé en ce que** la technique de convoyage comprend une technique de convoyage suspendu pour le transport des poches suspendues (18, 18a..18d) depuis le dispositif de tri automatique (19a) vers la première position (P1) ou est constituée par une telle technique de convoyage suspendu.

9. Système de stockage et de préparation de commandes (1a..1d), comprenant
un robot (2) pour le déchargement de marchandises (9, 9a..9d), comprenant une tête de robot (6) et au moins deux préhenseurs différents pouvant être alternativement couplés à la tête de robot (6) ou au moins deux préhenseurs différents agencés sur la tête de robot (6) et pouvant être activés alternativement (7a..7c),
un système de commande électronique (14), qui est conçu pour saisir des types de préhensibilité pour les différentes marchandises (9, 9a..9d), le type de préhensibilité indiquant quel préhenseur (7a..7c), selon le type de préhenseur, rend possible la préhension de la marchandise respective (9, 9a..9d), et qui est en outre conçu pour sélectionner un préhenseur (7a..7c) mis à disposition parmi les différents types de préhenseurs selon le type de préhensibilité de la marchandise (9, 9a..9d) à décharger et pour déclencher un couplage du préhenseur sélectionné (7a..7c) avec la tête de robot (6) ou une activation du préhenseur sélectionné (7a..7c) sur la tête de robot (6), et
une technique de convoyage (10a, 16), qui est conçue pour transporter des marchandises (9, 9a..9d) vers une première position (P1) dans une zone d'action du robot (2),
le robot (2) étant conçu pour saisir la marchandise (9, 9a..9d) avec le préhenseur sélectionné (7a..7c) à la première position (P1) dans la zone d'action du robot (2) et déposer la marchandise (9, 9a..9d) à une deuxième position (P2) dans la zone d'action du robot (2),
**caractérisé en ce que**
la technique de convoyage (10a, 16) est en outre conçue pour acheminer vers le robot (2) les marchandises (9, 9a..9d) séparément selon des groupes de marchandises (G1..G3), les marchandises (9, 9a..9d) d'un premier groupe de marchandises (G1) étant dans un premier temps mises à disposition à la première position (P1), puis les marchandises (9, 9a..9d) d'un deuxième groupe de marchandises (G2) étant mises à disposition à la première position (P1), le premier groupe de marchandises (G1) comprenant des marchandises (9, 9a..9d) d'un premier type de préhensibilité parmi les types de préhensibilité et le deuxième groupe de marchandises (G2) comprenant des marchandises (9, 9a..9d) d'un deuxième type de préhensibilité parmi les types de préhensibilité, et
le système de stockage et de préparation de commandes comprend un dispositif de tri automatique (19a, 19b), relié techniquement, du point de vue du convoyage, à la technique de convoyage (10a, 16), ou un dispositif de tri automatique (19a, 19b) comprenant la technique de convoyage (10a, 16), le dispositif de tri (19a, 19b) étant relié au système de commande électronique (14) du point de vue de la commande et étant commandé par le système de commande (14) de telle sorte que les différentes marchandises (9, 9a..9d) soient triées en groupes de marchandises (G1..G3) selon le type de préhensibilité, le dispositif de tri (19a, 19b) étant en outre conçu pour :
A) trier les marchandises (9, 9a..9d), au sein d'un groupe de marchandises (G1..G3), par article en fonction d'un type de marchandise des marchandises (9, 9a..9d), lorsque le transfert des marchandises (9, 9a..9d) est effectué à une entrée de marchandises et que les marchandises (9, 9a..9d) doivent être stockées par article dans le système de stockage et de préparation de commandes (1a..1d), ou lorsque les marchandises (9, 9a..9d) sont préparées dans le secteur business-to-business, et
B) agencer les marchandises (9, 9a..9d), au sein d'un groupe de marchandises (G1..G3), de manière chaotique en fonction d'un type de marchandise des marchandises (9, 9a..9d), lorsque le transfert des marchandises (9, 9a..9d) est effectué à une entrée de marchandises et que les marchandises (9, 9a..9d) doivent être stockées de manière chaotique dans le système de stockage et de préparation de commandes (1a..1d), ou lorsque les marchandises (9, 9a..9d) sont préparées dans le secteur business-to-consumer.
